(19) **Europäisches Patentamt**
**European Patent Office**
**Office européen des brevets**

(11) **EP 4 093 072 A1**

(12) **EUROPEAN PATENT APPLICATION**
published in accordance with Art. 153(4) EPC

(43) Date of publication:
**23.11.2022 Bulletin 2022/47**

(21) Application number: **20919203.8**

(22) Date of filing: **23.12.2020**

(51) International Patent Classification (IPC):
**H04W 8/18** (2009.01)

(52) Cooperative Patent Classification (CPC):
**H04W 8/18; H04W 24/08; H04W 24/10;** Y02D 30/70

(86) International application number:
**PCT/CN2020/138635**

(87) International publication number:
**WO 2021/159863 (19.08.2021 Gazette 2021/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.02.2020 CN 202010093901**

(71) Applicant: **Huawei Technologies Co., Ltd.
Shenzhen, Guangdong 518129, (CN)**

(72) Inventors:
• **WANG, Zhou**
 **Shenzhen, Guangdong 518129 (CN)**
• **WANG, Jian**
 **Shenzhen, Guangdong 518129 (CN)**
• **CAI, Yu**
 **Shenzhen, Guangdong 518129 (CN)**
• **XU, Haibo**
 **Shenzhen, Guangdong 518129 (CN)**

(74) Representative: **Maiwald GmbH
Elisenhof
Elisenstraße 3
80335 München (DE)**

(54) **COMMUNICATION PARAMETER MEASUREMENT METHOD FOR MULTI-SIM TERMINAL DEVICE, TERMINAL DEVICE AND ACCESS NETWORK DEVICE**

(57) This application provides a communication parameter measurement method for a multi-SIM terminal device, a terminal device, and an access network device. In the method, a terminal device receives first measurement configuration information sent by an access network device; the terminal device performs communication parameter measurement on a first SIM card based on the first measurement configuration information, to obtain a measurement result, where the measurement result is applicable to a plurality of SIM cards included in the terminal device; and the terminal device sends a first measurement report to the access network device, where the first measurement report includes the measurement result. The terminal device performs communication parameter measurement on the first SIM card to obtain the measurement result, and the measurement result is applicable to the plurality of SIM cards included in the terminal device. Therefore, measurement does not need to be performed on each SIM card, so that measurement power consumption is effectively reduced, data transmission efficiency is improved, and a measurement procedure for the multi-SIM terminal device is optimized.

FIG. 3

## Description

This application claims priority to Chinese Patent Application No. 202010093901.5, filed with the China National Intellectual Property Administration on February 14, 2020 and entitled "COMMUNICATION PARAMETER MEASUREMENT METHOD FOR MULTI-SIM TERMINAL DEVICE, TERMINAL DEVICE, AND ACCESS NETWORK DEVICE", which is incorporated herein by reference in its entirety.

## TECHNICAL FIELD

This application relates to the communication field, and more specifically, to a communication parameter measurement method for a multi-SIM terminal device, a terminal device, and an access network device.

## BACKGROUND

With development of communication technologies, many terminal devices (for example, a mobile phone) have a function of supporting a plurality of subscriber identification module (subscriber identification module, SIM) cards. For example, a terminal device supports two SIM cards. There are a plurality of possible implementations, for example, a dual SIM single standby (dual SIM single standby, DSSS) mode, a dual SIM dual standby (dual SIM dual standby, DSDS) mode, or a dual SIM dual active (dual SIM dual active, DSDA) mode. When performing cell reselection or cell handover, a terminal device needs to measure a neighboring cell. If the terminal device has a plurality of SIM cards, each SIM card has a set of measurement procedure. In this way, signaling overheads and a waste of resources are caused. Therefore, how to perform communication parameter measurement on a multi-SIM terminal device is a problem to be resolved urgently.

## SUMMARY

This application provides a communication parameter measurement method for a multi-SIM terminal device, a terminal device, and an access network device. According to the method, measurement power consumption is effectively reduced, data transmission efficiency is improved, and a measurement procedure of the multi-SIM terminal device is optimized.

According to a first aspect, a communication parameter measurement method for a multi-SIM terminal device is provided, where the method is applied to a terminal device. The method includes: receiving first measurement configuration information sent by an access network device; performing communication parameter measurement on a first SIM card based on the first measurement configuration information, to obtain a measurement result, where the measurement result is applicable to a plurality of SIM cards included in the terminal device, and the plurality of SIM cards share a same air interface network; and sending a first measurement report to the access network device, where the first measurement report includes the measurement result.

Therefore, the terminal device performs communication parameter measurement on the first SIM card based on the first measurement configuration information, to obtain the measurement result. The measurement result is applicable to the plurality of SIM cards included in the terminal device. In other words, a SIM card other than the first SIM card can reuse the measurement result of the first SIM card, and measurement does not need to be performed on each SIM card. In this way, network overheads of the terminal device may be reduced, measurement power consumption is effectively reduced, data transmission efficiency is improved, and a measurement procedure of the multi-SIM terminal device is optimized.

It should be understood that the first SIM card may be a SIM card determined by the terminal device from the plurality of subscriber identity module SIM cards based on a measurement control parameter. Alternatively, the first SIM card may be two SIM cards determined by the terminal device from the plurality of subscriber identity module SIM cards. When one SIM card is tested, an error may occur due to a network or device problem. Therefore, if one more card is tested, and an average value of measurement results of the two SIM cards is obtained, a measurement error may be reduced, and a measurement result is improved. In this application, that measurement is performed on two SIM cards is merely used as an example. A quantity of first SIM cards is not limited in this application.

With reference to the first aspect, in some implementations of the first aspect, before the terminal device receives the first measurement configuration information, the method further includes: sending a measurement sharing policy request to the access network device, where the measurement sharing policy request includes identification information of the plurality of SIM cards; and receiving measurement sharing policy confirmation information sent by the access network device, where the measurement sharing policy confirmation information includes identification information of the first SIM card.

In this implementation, the terminal device sends the measurement sharing policy request to the access network device, where the measurement sharing policy request includes identification information of the plurality of SIM cards to which the measurement sharing policy is applicable. The terminal device does not need to determine a SIM card on which measurement is to be performed, and the access network device determines the SIM card on which measurement is to be performed, that is, the first SIM card, so that a computation amount of the terminal device may be reduced.

With reference to the first aspect, in some implementations of the first aspect, before the terminal device receives the first measurement configuration information, the method further includes: sending a measurement sharing policy request to the access network device, where the measurement sharing policy request includes identification information of the plurality of SIM cards and identification information of a SIM card preselected for parameter measurement; and receiving measurement sharing policy confirmation information sent by the access network device, where the measurement sharing policy confirmation information includes identification information of the first SIM card, and the first SIM card is the SIM card preselected for parameter measurement, or the first SIM card is a SIM card in the plurality of SIM cards other than the SIM card preselected for parameter measurement.

In this implementation, the terminal device sends a measurement sharing policy request to the access network device, where the measurement sharing policy request includes identification information of the plurality of SIM cards to which the measurement sharing policy is applicable, and also includes identification information of a SIM card that is to be measured and that is determined by the terminal device, that is, the SIM card preselected for parameter measurement. When determining the first SIM card on which measurement is to be performed, the access network device may use, as a reference, the SIM card that is provided by the terminal device and that is preselected for parameter measurement, to further improve reliability of the determined first SIM card.

With reference to the first aspect, in some implementations of the first aspect, before the terminal device receives the first measurement configuration information, the method further includes: sending a measurement sharing policy request to the access network device, where the measurement sharing policy request includes identification information of the plurality of SIM cards and identification information of a SIM card preselected for parameter measurement; and receiving measurement sharing policy confirmation information sent by the access network device, where the measurement sharing policy confirmation information indicates that the access network device agrees with the measurement sharing policy request sent by the terminal device, and the SIM card preselected for parameter measurement is the first SIM card.

In this implementation, the terminal device sends the measurement sharing policy request to the access network device, where the measurement sharing policy request includes identification information of the plurality of SIM cards to which the measurement sharing policy is applicable, and also includes identification information of an SIM card that is to be measured and that is determined by the terminal device, that is, the SIM card preselected for parameter measurement. The access network device does not need to determine again the first SIM card on which measurement is to be performed, so that a computation amount of the access network device is reduced. The measurement sharing policy confirmation information sent by the access network device to the terminal device does not need to include identification information of the first SIM card, so that an information length is reduced.

With reference to the first aspect, in some implementations of the first aspect, before the terminal device receives the first measurement configuration information, the method further includes: sending a measurement sharing policy request to the access network device, where the measurement sharing policy request includes identification information of the plurality of SIM cards that are included in the terminal device and identification information of a SIM card preselected for parameter measurement; and receiving the first measurement configuration information sent by the access network device, where the first measurement configuration information includes the identification information of the plurality of SIM cards and identification information of the first SIM card.

In this implementation, after the terminal device sends the measurement sharing policy request to the access network device, the access network device no longer needs to return measurement sharing policy confirmation information to the terminal device. Instead, when the measurement is initiated, the access network device sends the first measurement configuration information to the terminal device to confirm execution of the measurement sharing policy, so that signaling overheads can be reduced.

With reference to the first aspect, in some implementations of the first aspect, before the terminal device receives the first measurement configuration information, the method further includes: sending a measurement sharing policy request to the access network device, where the measurement sharing policy request includes identification information of the plurality of SIM cards and identification information of a SIM card preselected for parameter measurement, and the SIM card preselected for parameter measurement is the first SIM card.

In this implementation, the terminal device and the access network device agree in advance that after the terminal device sends the measurement sharing policy request to the access network device, the access network device agrees by default that the terminal device performs the measurement sharing request policy, and the access network device does not need to return measurement sharing policy confirmation information to the terminal device, so that signaling overheads can be reduced.

With reference to the first aspect, in some implementations of the first aspect, the method further includes: The terminal device determines, based on performance of a SIM card, a SIM card preselected for parameter measurement.

The terminal device determines, based on a performance parameter of a SIM card, the SIM card preselected for parameter measurement, so that a measurement result of the selected card is more accurate, and a case in which reliability of a measurement result is reduced because the SIM card preselected for parameter measurement is randomly determined is avoided.

With reference to the first aspect, in some implementations of the first aspect, the access network device may send the first measurement configuration information only to the first SIM card of the terminal device. In this way, measurement configuration information that is sent can be reduced, and network overheads can be reduced.

With reference to the first aspect, in some implementations of the first aspect, regardless of whether the access network device sends the first measurement configuration information only to the first SIM card of the terminal device or the access network device sends the first measurement configuration information to the plurality of SIM cards supported by the terminal device, the terminal device performs measurement on the first SIM card, to obtain the measurement result. The terminal device may store the measurement result in a memory, the plurality of SIM cards of the terminal device may read the measurement result, and the measurement result is applicable to the plurality of SIM cards included in the terminal device. In other words, a SIM card other than the first SIM card can reuse the measurement result of the first SIM card, and measurement does not need to be performed on each SIM card. In this way, measurement power consumption is effectively reduced, data transmission efficiency is improved, and a measurement procedure of the multi-SIM terminal device is optimized.

With reference to the first aspect, in some implementations of the first aspect, the access network device sends the first measurement configuration information only to the first SIM card of the terminal device. After receiving the first measurement configuration information, the first SIM card configures the first configuration information for the plurality of SIM cards supported by the terminal device, and same measurement is performed on the plurality of SIM cards. The access network device may send the first measurement configuration information only to the first SIM card of the terminal device. In this way, measurement configuration information that is sent can be reduced, and network overheads can be reduced.

According to a second aspect, a communication parameter measurement method for a multi-SIM terminal device is provided, where the method is applied to a terminal device. The method includes: The terminal device receives a plurality of pieces of measurement configuration information sent by an access network device, where each of the plurality of pieces of measurement configuration information corresponds to one SIM card in a plurality of SIM cards supported by the terminal device, and each of the plurality of pieces of measurement configuration information includes identifier information of a SIM card measured by each of the plurality of pieces of measurement configuration information; the terminal device performs measurement on a first subscriber identity module SIM card based on first measurement configuration information, to obtain a measurement result, where the plurality of pieces of measurement configuration information include the first measurement configuration information, the measurement result is applicable to the plurality of SIM cards supported by the terminal device, and the plurality of SIM cards share a same air interface network; the terminal device replicates the measurement result into a plurality of copies; and the terminal device sends a plurality of measurement reports to the access network device.

Therefore, the terminal device receives the plurality of pieces of measurement configuration information sent by the access network device, and the terminal device performs measurement on the first subscriber identity module SIM card based on the first measurement configuration information, to obtain the measurement result. Measurement does not need to be performed on each SIM card. The terminal device replicates the measurement result into the plurality of copies, and sends the plurality of measurement reports to the access network device. In this way, an existing measurement procedure is not changed while measurement power consumption is effectively reduced and data transmission efficiency is improved.

According to a third aspect, a communication parameter measurement method for a multi-SIM terminal device is provided, where the method is applied to an access network device. The method includes: sending first measurement configuration information to a terminal device; receiving a first measurement report sent by the terminal device, where the first measurement report is applicable to a plurality of SIM cards supported by the terminal device.

With reference to the third aspect, in some implementations of the third aspect, before the sending first measurement configuration information to a terminal device, the method further includes: receiving a measurement sharing policy request sent by the terminal device, where the measurement sharing policy request includes identification information of the plurality of SIM cards; and sending measurement sharing policy confirmation information to the terminal device, where the measurement sharing policy confirmation information includes identification information of the first SIM card.

With reference to the third aspect, in some implementations of the third aspect, before the sending first measurement configuration information to a terminal device, the method further includes: receiving a measurement sharing policy request sent by the terminal device, where the measurement sharing policy request includes identification information of the plurality of SIM cards and identification information of a SIM card preselected for parameter measurement; and sending measurement sharing policy confirmation information to the terminal device, where the measurement sharing policy confirmation information includes identification information of the first SIM card, and the first SIM card is the SIM card preselected for parameter measurement, or the first SIM card is a SIM card in the plurality of SIM cards other than the SIM card preselected for parameter measurement.

With reference to the third aspect, in some implementations of the third aspect, before the sending first measurement configuration information to a terminal device, the method further includes: receiving a measurement sharing policy request sent by the terminal device, where the measurement sharing policy request includes identification information of the plurality of SIM cards and identification information of a SIM card preselected for parameter measurement; and sending measurement sharing policy confirmation information to the terminal device, where the measurement sharing policy confirmation information indicates that the access network device agrees with the measurement sharing policy request sent by the terminal device, and the SIM card preselected for parameter measurement is the first SIM card.

With reference to the third aspect, in some implementations of the third aspect, before the sending first measurement configuration information to a terminal device, the method further includes: receiving a measurement sharing policy request sent by the terminal device, where the measurement sharing policy request includes identification information of the plurality of SIM cards that are included in the terminal device and identification information of a SIM card preselected for parameter measurement; and sending the first measurement configuration information to the terminal device, where the first measurement configuration information includes the identification information of the plurality of SIM cards and identification information of the first SIM card.

With reference to the third aspect, in some implementations of the third aspect, before the sending first measurement configuration information to a terminal device, the method further includes: receiving a measurement sharing policy request sent by the terminal device, where the measurement sharing policy request includes identification information of the plurality of SIM cards, or the measurement sharing policy request includes identification information of the plurality of SIM cards that are included in the terminal device and identification information of a SIM card preselected for parameter measurement; sending a second measurement configuration message to the terminal device, where the second measurement configuration message includes identification information of a target SIM card; and receiving a measurement report sent by the terminal device, where the measurement report includes a measurement result of the target SIM card and identification information of the plurality of SIM cards.

With reference to the third aspect, in some implementations of the third aspect, before the sending first measurement configuration information to a terminal device, the method further includes: receiving a measurement sharing policy request sent by the terminal device, where the measurement sharing policy request includes identification information of the plurality of SIM cards and identification information of a SIM card preselected for parameter measurement, and the SIM card preselected for parameter measurement is the first SIM card.

With reference to the third aspect, in some implementations of the third aspect, the method further includes: The access network device determines the first SIM card based on performance of a SIM card.

With reference to the third aspect, in some implementations of the third aspect, the performance of a SIM card includes one or more of the following parameters: a quantity of supported dual-connectivity DC combinations, a quantity of supported carrier aggregation CA combinations, a quantity of supported multiple-input multiple-output MIMOs, whether non-gap measurement is supported, and a communication data volume.

According to a fourth aspect, a communication parameter measurement method for a multi-SIM terminal device is provided, where the method is applied to an access network device. The method includes: replicating measurement configuration information into a plurality of copies based on a measurement sharing policy; sending a plurality of pieces of measurement configuration information to a terminal device by using a plurality of SIM cards supported by the terminal device, where each of the plurality of pieces of measurement configuration information corresponds to one SIM card in the plurality of SIM cards that are supported by the terminal device, and each of the plurality of pieces of measurement configuration information includes identification information of a SIM card measured by using the piece of measurement configuration information; and receiving a plurality of measurement reports that are sent, by using the plurality of SIM cards supported by the terminal device, by the terminal device.

According to a fifth aspect, a terminal device is provided, where the apparatus includes at least one processor and a memory, the memory is configured to store instructions, and the processor is configured to execute the instructions stored in the memory. When the processor executes the instructions stored in the memory, the at least one processor is configured to perform the method in the first aspect or any possible implementation of the first aspect and the method in the second aspect or any possible implementation of the second aspect.

According to a sixth aspect, an access network device is provided, where the apparatus includes at least one processor and a memory, the memory is configured to store instructions, and the processor is configured to execute the instructions stored in the memory. When the processor executes the instructions stored in the memory, the at least one processor is configured to perform the method in the third aspect or any possible implementation of the third aspect and the method in the fourth aspect or any possible implementation of the fourth aspect.

According to a seventh aspect, a terminal device is provided, where the apparatus includes at least one processor and an interface circuit. The at least one processor is configured to perform the method in the first aspect or any possible implementation of the first aspect and the method in the second aspect or any possible implementation of the second aspect.

According to an eighth aspect, an access network device is provided, where the apparatus includes at least one processor and an interface circuit. The at least one processor is configured to perform the method in the third aspect or any possible implementation of the third aspect and the method in the fourth aspect or any possible implementation of the fourth aspect.

According to a ninth aspect, a computer program product is provided, where the computer program product includes instructions. When the instructions are run on a computer, the computer is enabled to perform the method in the first aspect or any possible implementation of the first aspect, or perform the method in the second aspect or any possible implementation of the second aspect, or the method in the third aspect or any possible implementation of the third aspect, or the method in the fourth aspect or any possible implementation of the fourth aspect.

According to a tenth aspect, a computer-readable storage medium is provided, where the computer-readable storage medium stores a computer program. When the computer program is executed, the computer program is used to perform the method in the first aspect or any possible implementation of the first aspect, or perform the method in the second aspect or any possible implementation of the second aspect, or the method in the third aspect or any possible implementation of the third aspect, or the method in the fourth aspect or any possible implementation of the fourth aspect.

According to an eleventh aspect, a chip is provided, including a processor and a communication interface. The processor is configured to invoke instructions from the communication interface and run the instructions. When the processor executes the instructions, the method in the first aspect or any possible implementation of the first aspect is implemented; or the method in the second aspect or any possible implementation of the second aspect is performed; or the method in the third aspect or any possible implementation of the third aspect is performed; or the method in the fourth aspect or any possible implementation of the fourth aspect is performed.

Optionally, the chip may further include a memory. The memory stores instructions, and the processor is configured to execute the instructions stored in the memory or instructions from another source. When the instructions are executed, the processor is used to implement the method in the first aspect or any possible implementation of the first aspect, or perform the method in the second aspect or any possible implementation of the second aspect, or the method in the third aspect or any possible implementation of the third aspect, or the method in the fourth aspect or any possible implementation of the fourth aspect.

According to a twelfth aspect, a communication system is provided. The communication system includes an apparatus that has a function of implementing the methods and various possible designs in the first aspect, an apparatus that has a function of implementing the methods and various possible designs in the second aspect, an apparatus that has a function of implementing the methods and various possible designs in the third aspect, and an apparatus that has a function of implementing the methods and various possible designs in the fourth aspect.

## BRIEF DESCRIPTION OF DRAWINGS

FIG. 1 is a schematic diagram of an application scenario according to an embodiment of this application;
FIG. 2 shows a measurement procedure of multi-SIM terminal devices of a same operator in a current technology;
FIG. 3 is a schematic flowchart of a communication parameter measurement method for a multi-SIM terminal device according to an embodiment of this application;
FIG. 4 is a schematic flowchart of a communication parameter measurement method for a multi-SIM terminal device according to an embodiment of this application;
FIG. 5 is a schematic flowchart of a communication parameter measurement method for a multi-SIM terminal device according to an embodiment of this application;
FIG. 6 shows a measurement process in which two SIM cards reuse a measurement result;
FIG. 7 shows a measurement process in which two SIM cards reuse a measurement result;
FIG. 8 shows a measurement process in which two SIM cards reuse a measurement result;
FIG. 9 is a schematic block diagram of a communication apparatus according to an embodiment of this application;
FIG. 10 is a schematic diagram of a structure of a terminal device according to this application; and
FIG. 11 is a schematic diagram of a structure of an access network device according to this application.

## DESCRIPTION OF EMBODIMENTS

The following describes the technical solutions in this application with reference to the accompanying drawings.

The technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a subsequent evolved communication system, or the like.

A terminal device in embodiments of this application may alternatively be referred to as: user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice/data connectivity for a user, for example, a hand-held device or a vehicle-mounted device that has a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function, or another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

By way of example rather than limitation, in embodiments of this application, the wearable device may also be referred to as a wearable smart device, and is a generic term for wearable devices developed by intelligently designing daily wear by using a wearable technology, such as glasses, gloves, watches, clothes, and shoes. The wearable device is a portable device that is directly worn by a user or integrated into clothes or an accessory of a user. The wearable device is more than a hardware device. The wearable device implements powerful functions through software support, data exchange, and cloud interaction. In a broad sense, the wearable smart device has full functions and a large size, and can implement all or partial functions without depending on a smartphone, for example, a smart watch, smart glasses, or the like. In addition, the wearable smart device focuses only on one type of application function, and needs to be used together with another device such as a smartphone, for example, various smart bands or smart jewelries that perform sign monitoring.

In addition, in embodiments of this application, the terminal device may alternatively be a terminal device in an internet of things (internet of things, IoT) system. The IoT is an important part of future information technology development, and a main technical feature of the IoT is that an object is connected to a network by using a communication technology, to implement an intelligent network for human-machine interconnection and thing-thing interconnection.

If the various terminal devices described above are located in a vehicle (for example, placed in the vehicle or installed in the vehicle), the terminal devices may be considered as vehicle-mounted terminal devices. A vehicle-mounted terminal device is also referred to as, for example, an on-board unit (on-board unit, OBU).

In embodiments of this application, the terminal device may further include a relay (relay). Alternatively, it may be understood that any device that can perform data communication with a base station may be considered as the terminal device.

An access network device in embodiments of this application may be a device for communicating with the terminal device. The access network device may alternatively be referred to as an access device or a radio access network device, and may be an evolved NodeB (evolved NodeB, eNB or eNodeB) in an LTE system, or may be a radio controller in a cloud radio access network (cloud radio access network, CRAN) scenario. Alternatively, the access device may be a relay station, an access point, a vehicle-mounted device, a wearable device, an access device in a 5G network, a network device in a future evolved PLMN network, or the like. The access device may be an access point (access point, AP) in a WLAN, or may be a gNB in a new radio (new radio, NR) system. This is not limited in embodiments of this application.

In addition, in embodiments of this application, the access network device is a device in an access network (radio access network, RAN), or in other words, a RAN node that connects the terminal device to a wireless network. For example, by way of example rather than limitation, examples of an access network device may be given: a gNB, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home base station (for example, a home evolved NodeB, or a home Node B, HNB), a baseband unit (base band unit, BBU), a wireless fidelity (wireless fidelity, Wi-Fi) access point (access point, AP), or the like. In a network structure, a network device may include a centralized unit (centralized unit, CU) node, a distributed unit (distributed unit, DU) node, a RAN device that includes a CU node and a DU node, or a RAN device including a control plane CU node (a CU-CP node), a user plane CU node (a CU-UP node), and a DU node.

The access network device provides a service for a cell. The terminal device communicates with the access network device by using a transmission resource (for example, a frequency domain resource, or in other words, a spectrum resource) used by the cell. The cell may be a cell corresponding to the access network device (for example, a base station), and the cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

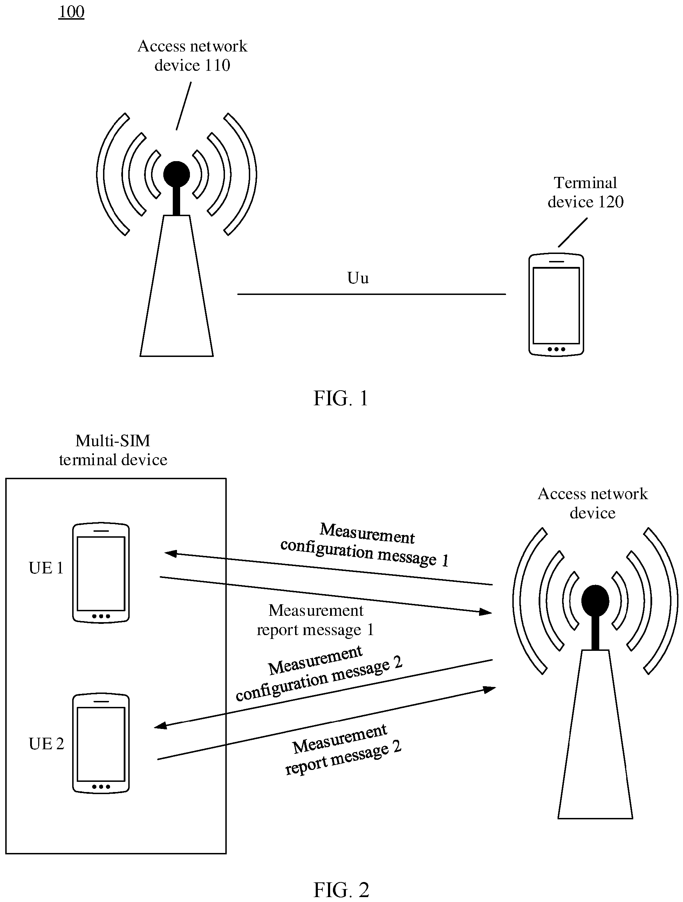

FIG. 1 is a schematic diagram of an application scenario 100 according to an embodiment of this application. In FIG. 1, an access network device 110 and a terminal device 120 are included. For example, the access network device 110 works in an evolved universal mobile telecommunication system terrestrial radio access (evolved UMTS terrestrial radio access, E-UTRA) system, or works in an NR system, or works in a next-generation communication system or another communication system. The access network device 110 may communicate with the terminal device 120 by using a Uu interface. In this embodiment of this application, one access network device may serve a plurality of terminal devices. FIG. 1 uses only one of the terminal devices as an example.

In FIG. 1, the access network device is, for example, a base station. The access network device corresponds to different devices in different systems. For example, the access network device may correspond to an eNB in a 4G system, and correspond to a 5G access network device such as a gNB in a 5G system. The technical solutions provided in this embodiment of this application may also be applied to a future mobile communication system. Therefore, the access network device in FIG. 1 may correspond to an access network device in the future mobile communication system. In FIG. 1, an example in which the access network device is a base station is used. Actually, refer to the foregoing descriptions, and the access network device may alternatively be a device such as a roadside unit (Roadside Unit, RSU).

It should be understood that the communication system shown in FIG. 1 may further include more network nodes, for example, another terminal device or another access network device. The access network devices or the terminal devices included in the communication system shown in FIG. 1 may be the access network devices or terminal devices in the foregoing various forms. Details are not shown one by one in the figure in this embodiment of this application.

In this embodiment of this application, the terminal device supports at least one subscriber identity, for example, a first subscriber identity and/or a second subscriber identity. Herein, the "subscriber identity" (for example, the first subscriber identity or the second subscriber identity) is a logical concept. For example, the "subscriber identity" may correspond to a SIM card, subscriber information, a virtual SIM card, or a subscriber identifier (such as an international mobile subscriber identity (international mobile subscriber identity, IMSI) or a temporary mobile subscriber identity (temporary mobile subscriber identity, TMSI)). From a perspective of a network side, different "subscriber identities" logically correspond to different communication entities served by the network side, for example, terminal devices in the 4G and 5G systems. For example, for the network side, a terminal device that supports two subscriber identities may be considered as two communication entities. For another example, when the "subscriber identity" corresponds to a SIM card or subscriber information, the network side identifies two terminal devices that support different SIM cards or different subscriber information as two different communication entities. The network side also identifies one terminal device that supports a plurality of different SIM cards or a plurality of pieces of subscriber information as a plurality of different communication entities, even though actually, the terminal device that supports a plurality of different SIM cards or a plurality of pieces of subscriber information is only one physical entity.

For example, the SIM card may be understood as a key for the terminal device to access a mobile network. For ease of description, in embodiments of this application, the SIM card and evolution thereof are collectively referred to as the SIM card. For example, the SIM card may be an identity card of a digital mobile phone subscriber of the global system for mobile communications (global system for mobile communications, GSM), and is used to store an identification number and a secret key of the subscriber and support authentication performed by the GSM system on the subscriber. For another example, the SIM card may alternatively be a universal subscriber identity module (universal subscriber identity module, USIM) card, or may be referred to as an upgraded SIM card. In this embodiment of this application, an example in which the "subscriber identity" corresponds to the SIM card is mainly used for description.

In this embodiment of this application, that one SIM card is installed in a terminal device is considered as that the terminal device supports one subscriber identity. For example, that two SIM cards are installed in a terminal device is considered as that the terminal device supports two subscriber identities. In other words, a SIM card and a subscriber identity are in a one-to-one mapping relationship.

For example, currently, an increasing quantity of smartphones support simultaneous insertion of two SIM cards. For example, one SIM card is for a private service, and the other SIM card is for work; or one SIM card is for a data service, and the other SIM card is for a voice service. Two SIM cards in a mobile phone may belong to a same mobile operator, or may belong to different mobile operators. The two SIM cards in a mobile phone may belong to a same standard (including NR, LTE, wideband code division multiple access (wideband code division multiple access, WCDMA), time division multiple access (time division multiple access, TDMA) 2000, GSM, or the like), or may belong to different standards.

Based on different transceiver capabilities of terminal devices, a dual-SIM terminal device may have one of the following three modes.

In a passive mode, or referred to as a DSSS mode, although two SIM cards can be inserted, only one SIM card can be used at a same moment. In a DSDS mode, two SIM cards share one set of transceiver. For an idle (idle) state, the transceiver needs to monitor paging messages of the two cards. For example, the transceiver may perform monitoring in a time division multiplexing (time division multiple, TDM) manner. In a DSDA mode, two SIM cards each use a transceiver. The two SIM cards may be in an RRC connected state simultaneously. In other words, a terminal device may simultaneously receive and transmit data of the two SIM cards.

The following describes the foregoing three radio resource control (radio resource control, RRC) states of the terminal device. As described above, the three RRC states are respectively an RRC connected state (connected state), an RRC idle state (idle state), and an inactive state (inactive state). The inactive state may alternatively be referred to as a non-active state, a deactivated state, or the like.

The RRC connected state (which may alternatively be referred to as a connected state for short. In this specification, the "connected state" and the "RRC connected state" are a same concept, and the two terms may be interchanged) is a state in which the terminal device establishes an RRC connection to a network, and data transmission may be performed.

The RRC idle state (which may alternatively be referred to as an idle state for short. In this specification, the "idle state" and the "RRC idle state" are a same concept, and the two terms may be interchanged) is a state in which the terminal device does not establish an RRC connection to a network, and a base station does not store a context of the terminal device. If the terminal device needs to enter the RRC connected state from the idle state, the terminal device needs to initiate an RRC connection establishment process.

The non-active state is a state in which the terminal device previously enters the RRC connected state, and then a base station releases the RRC connection, but the base station stores a context of the terminal device. If the terminal device needs to re-enter the RRC connected state from the non-active state, the terminal device needs to initiate an RRC connection resume process (or referred to as an RRC connection re-establishment process). Compared with the RRC connection establishment process, the RRC connection resume process has a shorter delay and fewer signaling overheads. However, because the base station needs to store the context of the terminal device, storage overheads of the base station are occupied.

In a moving process, the terminal device may transfer from a coverage area of one cell to a coverage area of another cell, and the terminal device performs cell reselection (Reselection) or cell handover (Handover). Cell reselection (Reselection) is mainly implemented by the terminal device. The terminal device determines, through radio resource management (Radio Resource Management, RRM) measurement, whether the terminal device is within a coverage area of a cell, receives reference signals from a plurality of cell base stations, calculates signal power, and performs comparison and selection. After a specific trigger condition and an access criterion are met, the terminal device completes cell reselection.

Cell handover (Handover) requires an access network device to configure the terminal device by using a series of RRM measurement configurations and based on feedback of the terminal device. A measurement report is triggered when an RRM measurement result meets a specific condition. After receiving the measurement report of the terminal device, a network device may send a handover command to the terminal device, to instruct the terminal device to hand over from one cell to another cell.

For inter-frequency/inter-RAT measurement in an RRC idle state or an inactive state, the terminal device is in an idle state most of the time, and does not need to receive or transmit data in a serving cell. The idle time may be used for inter-frequency/inter-RAT measurement, and therefore, a measurement gap GAP does not need to be configured.

For inter-frequency/inter-RAT measurement in an RRC connected state, based on a capability of the terminal device, measurement that requires a GAP or measurement that requires no GAP may be used. If the terminal device has a plurality of sets of radio frequency channels, and can support receiving a signal in an inter-frequency/inter-RAT neighboring cell when receiving and transmitting a signal in the serving cell, the terminal device supports a measurement manner that requires no GAP. Otherwise, a measurement manner that requires a GAP is required. In the GAP, signal reception and transmission in the serving cell are stopped, and a radio frequency channel is adjusted to an inter-frequency/inter-RAT frequency to receive signals from an inter-frequency/inter-RAT neighboring cell. A measurement gap is configured by a base station. In the GAP, the base station does not schedule, in the serving cell, downlink receiving and uplink transmission of the terminal device. Therefore, no uplink or downlink block error is caused in the GAP.

Increasing terminal devices (for example, a mobile phone) have a function of supporting a plurality of subscriber identity module (subscriber identification module, SIM) cards. When performing cell reselection or cell handover, the terminal device needs to perform measurement on a neighboring cell. If the terminal device has a plurality of SIM cards, repeated measurement usually occurs, as shown in FIG. 2. FIG. 2 shows a measurement procedure of multi-SIM terminal devices of a same operator in a current technology. It can be learned from the foregoing description that, from the perspective of a network side, different "subscriber identities" logically correspond to different communication entities served by the network side, for example, terminal devices in the 4G and 5G systems, even though actually, the terminal device that supports a plurality of SIM cards or a plurality of pieces of subscriber information is only a physical entity. In FIG. 2, UE 1 and UE 2 are two different communication entities from the perspective of a network side. However, on a terminal side, the UE 1 and the UE 2 are actually two subscriber identities on a terminal device, and may be a SIM 1 and a SIM 2. A network device separately sends a measurement configuration message 1 and a measurement configuration message 2 to the terminal device. After performing measurement on both the SIM 1 and the SIM 2, the terminal device feeds back a measurement report 1 and a measurement report 2 to the network device. Because radio environments of the two SIM cards are the same, measurement results are consistent to some extent. Because neighboring cell measurement is performed simultaneously on two SIM cards, signaling overheads and measurement power consumption are caused, and sometimes data communication may further be affected.

In view of this, this application provides a communication parameter measurement method for a multi-SIM terminal device. Parameter measurement is performed on the first SIM card based on the measurement sharing mode to obtain a measurement result, and the measurement result is applicable to the plurality of SIM cards. In this way, that measurement is separately performed on a plurality of SIM cards is avoided, measurement power consumption is reduced, and impact on data communication is reduced.

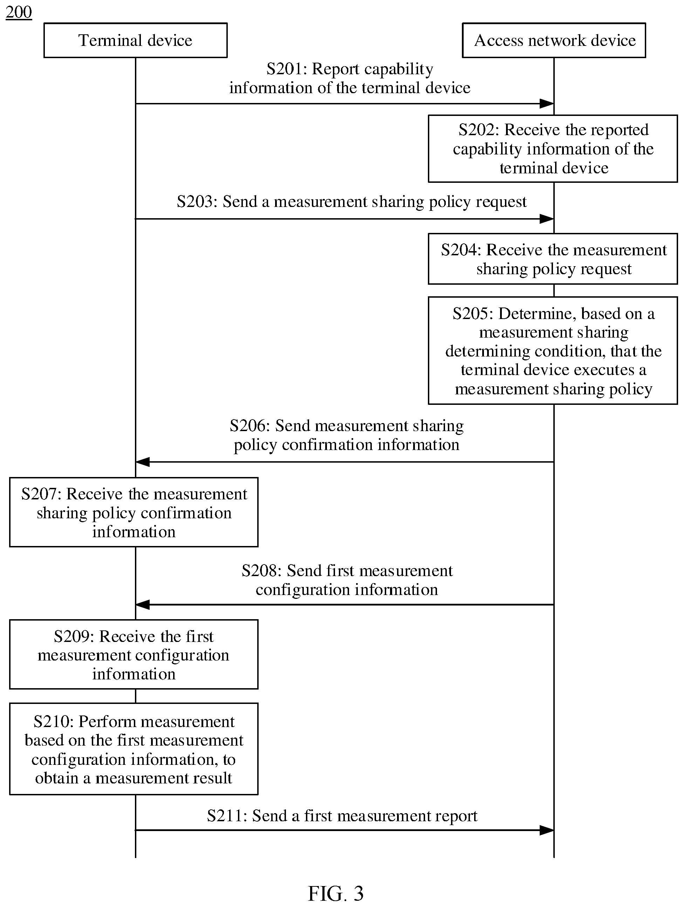

The following describes in detail, with reference to FIG. 3, a communication parameter measurement method for a multi-SIM terminal device provided in this application. FIG. 3 is a schematic flowchart of a communication parameter measurement method 200 for a multi-SIM terminal device according to an embodiment of this application. The method 200 may be applied to the scenario shown in FIG. 1. Certainly, the method may also be applied to another communication scenario. This is not limited in this embodiment of this application.

It should be further understood that in this embodiment of this application, the method is described by using an example in which the method is performed by a terminal device and an access network device. By way of example rather than limitation, the method may alternatively be performed by chips, chip systems, processors, or the like applied to the terminal device and the access network device.

As shown in FIG. 3, the method 200 shown in FIG. 3 may include S201 to S211. The following describes in detail each step in the method 200 with reference to FIG. 3.

S201: The terminal device reports capability information of the terminal device to the access network device.

Specifically, when any SIM card in the terminal device establishes a radio resource control (Radio Resource Control, RRC) connection, the terminal device reports capability information of the terminal device to the access network device. The capability information of the terminal device may include any one or more of the following parameters: identification information of a plurality of SIM cards supported by the terminal device, a DC combination and a CA combination that are supported by each of the plurality of SIM cards, a MIMO capability supported by the terminal device, and a measurement mode used by the plurality of SIM cards of the terminal device during inter-frequency or inter-RAT measurement, where the measurement mode includes gap measurement or non-gap measurement. The plurality of SIM cards supported by the terminal device all belong to a same access network.

It should be understood that, in addition to the foregoing parameters, the capability information of the terminal device may further include another parameter. This is not limited in this application.

It should be further understood that the terminal device may report the capability information of the terminal device to the access network device by using any one or more SIM cards installed in the terminal device. For example, the terminal device may agree in advance between a primary card and a secondary card that when the primary card establishes an RRC connection, the primary SIM card reports the capability information of the terminal device to the access network device, and the secondary card does not need to report the capability information of the terminal device to the access network device when establishing an RRC connection. Alternatively, when the secondary card establishes an RRC connection, the secondary SIM card reports the capability information of the terminal device to the access network device, and the primary card does not need to report the capability information of the terminal device to the access network device when establishing an RRC connection. Alternatively, when both the primary SIM card and the secondary SIM card establish an RRC connection, the primary SIM card and the secondary SIM card separately report the capability information of the terminal device to the access network device.

S202: The access network device receives the capability information of the terminal device reported by the terminal device.

S203: The terminal device sends a measurement sharing policy request to the access network device.

Specifically, the terminal device may send the measurement sharing policy request to the access network device by using any one or more SIM cards mounted on the terminal device. For example, the terminal device may agree in advance between the primary card and the secondary card that the measurement sharing policy request is sent to the access network device by using the primary SIM card. Alternatively, the measurement sharing policy request may be sent to the access network device by using the secondary SIM card. Alternatively, the measurement sharing policy request may be sent to the access network device by using both the primary SIM card and the secondary SIM card.

It should be understood that the measurement sharing policy request may include the identification information of the plurality of SIM cards that are supported by the terminal device. Alternatively, the measurement sharing policy request may not include the identification information of the plurality of SIM cards that are supported by the terminal device. The access network device determines, based on the capability information of the terminal device that is reported by the terminal device to the access network device, the plurality of SIM cards supported by the terminal device.

It should be further understood that the measurement sharing policy request may include the identification information of the plurality of SIM cards that are supported by the terminal device and identification information of a SIM card preselected for parameter measurement. The SIM card preselected for parameter measurement is a SIM card that is selected by the terminal device for parameter measurement. The access network device may select the SIM card preselected for parameter measurement as a first SIM card, or may select the SIM card that is not preselected for parameter measurement as a first SIM card. The first SIM card is a SIM card that is to be measured and that is determined by the access network device, and the first SIM card is the primary card or the secondary card in the terminal device.

An occasion on which the terminal device sends the measurement sharing policy request to the access network device may be classified into the following three cases.

In a first case, the terminal device may send the measurement sharing policy request to the access network device when RRC connection establishment is completed. In this case, the measurement sharing policy request may be included in RRC connection establishment complete signaling sent by the terminal device to the access network device. The time when RRC connection establishment is completed means the time when RRC connection establishment between the primary SIM card or the secondary SIM card and the access network device is completed.

In a second case, the terminal device may send the measurement sharing policy request to the access network device when the first measurement is initiated. The time when the first measurement is initiated means the time when the terminal device needs to perform measurement on a secondary component carrier, an inter-cell, or an inter-RAT system for the first time. A scenario in which the first measurement occurs includes but is not limited to cell reselection or cell handover.

In a third case, the terminal device may send the measurement sharing policy request to the access network device when sending the first measurement report to the access network device, where the first measurement report may include the measurement sharing policy request.

S204: The access network device receives the measurement sharing policy request sent by the terminal device.

S205: The access network device determines, based on a measurement sharing determining condition, that the terminal device executes the measurement sharing policy.

Specifically, the measurement sharing determining condition may be any one or more of the following conditions: The access network device supports the measurement sharing policy, and the current data overheads of the access network device are high and a data overhead requirement needs to be further reduced.

When the access network device determines, based on the measurement sharing determining condition, that the terminal device does not need to execute the measurement sharing policy, the access network device may not respond to the terminal device with any information. In other words, the access network device and the terminal device may normally execute another data service.

It should be understood that the access network device may alternatively directly determine, without any judgment, that the terminal device executes the measurement sharing policy. For example, the access network device and the terminal device may agree that when the access network device receives the measurement sharing policy request sent by the terminal device, the access network device determines, by default, that the terminal device executes the measurement sharing policy.

S206: The access network device sends measurement sharing policy confirmation information to the terminal device.

The measurement sharing policy confirmation information may include identification information of the first SIM card. Alternatively, the measurement sharing policy confirmation information may include identification information of the first SIM card and identification information of the plurality of SIM cards that are supported by the terminal device. Alternatively, the measurement sharing policy confirmation information may include identification information of the first SIM card, identification information of the plurality of SIM cards that are supported by the terminal device, and indication information, where the indication information may be one bit, and if the bit is 1, it indicates that the measurement sharing policy is to be executed, or if the bit is 0, it indicates that the measurement sharing policy is not to be executed. Alternatively, the measurement sharing policy confirmation information may include identification information of the first SIM card and indication information.

It should be understood that, when the measurement sharing policy confirmation information does not include the indication information, it indicates that the measurement sharing policy is executed by default.

It should be further understood that the identification information that is of the plurality of SIM cards supported by the terminal device and that is included in the measurement sharing policy may be identification information of some SIM cards in the terminal device. For example, the terminal device supports three SIM cards: a card 1, a card 2, and a card 3. The access network device determines that the measurement sharing policy is applied to the card 1 and the card 2, where the card 2 is the first SIM card determined by the access network device.

The access network device may send the measurement sharing policy confirmation information to any one or more SIM cards supported by the terminal device. For example, the access network device may send the measurement sharing policy confirmation information to the primary card of the terminal device. Alternatively, the access network device may jointly send the measurement sharing policy confirmation information to the secondary card of the terminal device. Alternatively, the access network device may send the measurement sharing policy confirmation information to both the primary card and the secondary card of the terminal device.

The access network device may determine the first SIM card based on performance of the plurality of SIM cards of the terminal device. Performance of a SIM card includes any one or more of the following parameters: a quantity of supported dual-connectivity DC combinations, a quantity of supported carrier aggregation CA combinations, a quantity of supported multiple-input multiple-output MIMOs, whether non-gap measurement is supported, and a communication data volume.

In an implementation, the access network device determines, as the first SIM card, a SIM card whose quantity of supported DC combinations is greater than a first threshold, and/or whose quantity of supported CA combinations is greater than a second threshold, and/or whose quantity of supported MIMOs is greater than a third threshold, and/or that supports non-gap measurement and whose communication data volume is less than a fourth threshold.

Specifically, to determine the first SIM card from the plurality of subscriber identity module SIM cards included in the terminal device based on a performance parameter, a DC combination, a CA combination, a MIMO capability, and a communication data volume may be used as conditions. A SIM card that meets all the conditions that a quantity of DC combinations is greater than the first threshold, a quantity of CA combinations is greater than the second threshold, a MIMO capability is greater than the third threshold and a communication data volume is less than the fourth threshold is determined as the first SIM card. Alternatively, a SIM card that meets at least one of the conditions that a quantity of DC combinations is greater than the first threshold, a quantity of CA combinations is greater than the second threshold, a MIMO capability is greater than the third threshold, and a communication data volume is less than the fourth threshold may be determined as the first SIM card.

It should be understood that selecting the DC combination, the CA combination, the MIMO capability, and the communication data volume as parameters for SIM card selection has the following advantages: First, it can be ensured that UE is in a working mode with a high transmission rate and high performance, and that a user has good use experience; and second, the foregoing performance rollback of the UE caused by later measurement failure can be avoided.

It should be understood that the performance parameter may further include another parameter. This is not limited in this application. For example, when determining the first SIM card from the plurality of subscriber identity module SIM cards, the terminal device may further determine the first SIM card based on a service requirement.

It should be understood that the first SIM card is a representative SIM card determined by the access network device from the plurality of subscriber identity module SIM cards that are supported by the terminal device. The "first" does not mean the 1st SIM card, and should not constitute any limitation on this application.

It should be further understood that the first SIM card may be a SIM card determined by the access network device from the plurality of subscriber identity module SIM cards that are supported by the terminal device. Alternatively, the first SIM card may be two SIM cards determined by the access network device from the plurality of subscriber identity module SIM cards that are supported by the terminal device. When one SIM card is tested, an error may occur due to a network or device problem. Therefore, if one more card is tested, and an average value of measurement results of the two SIM cards is obtained, a measurement error may be reduced, and a measurement result is improved. In this application, that measurement is performed on two SIM cards is merely used as an example. A quantity of first SIM cards is not limited in this application.

As described above, the measurement sharing policy request sent by the terminal device to the access network device may include the identification information of the plurality of SIM cards that are supported by the terminal device and the identification information of the SIM card preselected for parameter measurement. The SIM card preselected for parameter measurement may be used as a reference for the access network device to select the first SIM card. The first SIM card in the measurement sharing policy confirmation information may be the SIM card preselected for parameter measurement, or the first SIM card is a SIM card in the plurality of SIM cards other than the SIM card preselected for parameter measurement.

It should be understood that step S206 is optional. In an implementation, step S260 may be absent. In other words, after the access network device determines, based on the measurement sharing determining condition, that the terminal device executes the measurement sharing policy, the access network device does not send the measurement sharing policy confirmation information to the terminal device, but confirms the measurement sharing policy in measurement configuration information MeasConfig that is sent by the access network device to the terminal device when the measurement is initiated. In this case, in addition to the original measurement parameter, the measurement configuration information further includes the measurement sharing policy confirmation information. For example, in step S208, the access network device sends first measurement configuration information MeasConfig to the terminal device, where the first measurement configuration information further includes the measurement sharing policy confirmation information.

S207: The terminal device receives the measurement sharing policy confirmation information sent by the access network device.

S208: The access network device sends first measurement configuration information MeasConfig to the terminal device.

When the terminal device performs initial access, cell reselection, and cell handover, and adds a secondary cell group and a component carrier, the terminal device needs to perform measurement on signal power of a target cell, signal power of the secondary cell group, and signal power of the component carrier. The access network device configures a measurement target of the terminal device by using the measurement configuration information MeasConfig.

In an implementation, the access network device may send the first measurement configuration information only to the first SIM card of the terminal device. In this way, measurement configuration information that is sent can be reduced, and network overheads can be reduced.

In an implementation, the access network device may send the first measurement configuration information to the plurality of SIM cards supported by the terminal device. The plurality of SIM cards supported by the terminal device may be a plurality of SIM cards included in the measurement sharing policy confirmation information, or may be a plurality of SIM cards included in the measurement sharing policy confirmation information and a SIM card supported by the terminal device other than the plurality of SIM cards included in the measurement sharing policy confirmation information.

For example, the terminal device supports four SIM cards: a card 1, a card 2, a card 3, and a card 4. The measurement sharing policy confirmation information includes identification information of the first SIM card (the first SIM card is the card 1) and identification information of the card 1 and the card 2, and the card 3 and the card 4 are not applicable to the measurement sharing policy. The access network device may send the first measurement configuration information only to the card 1 of the terminal device. Alternatively, the access network device may send the first measurement configuration information to the card 1 and the card 2 of the terminal device. Alternatively, the access network device may send the first measurement configuration information to the card 1, the card 2, the card 3, and the card 4 of the terminal device.

It should be understood that the measurement configuration message further includes information such as a measurement object of the terminal device, a cell list, a report manner, a measurement identifier, and an event parameter.

S209: The terminal device receives the first measurement configuration information MeasConfig sent by the access network device.

S210: The terminal device performs measurement based on the first measurement configuration information, to obtain a measurement result.

In an implementation, regardless of whether the access network device sends the first measurement configuration information only to the first SIM card of the terminal device or the access network device sends the first measurement configuration information to the plurality of SIM cards supported by the terminal device, the terminal device performs measurement on the first SIM card, to obtain the measurement result. The terminal device may store the measurement result in a memory, the plurality of SIM cards of the terminal device may read the measurement result, and the measurement result is applicable to the plurality of SIM cards included in the terminal device. In other words, a SIM card other than the first SIM card can reuse the measurement result of the first SIM card, and measurement does not need to be performed on each SIM card. In this way, measurement power consumption is effectively reduced, data transmission efficiency is improved, and a measurement procedure of the multi-SIM terminal device is optimized.

It should be understood that when the measurement sharing policy confirmation information includes only the identification information of the first SIM card, the measurement result is applicable to each SIM card supported by the terminal device. Alternatively, when the measurement sharing policy confirmation information includes the identification information of the first SIM card and the identification information of the plurality of SIM cards that are supported by the terminal device, the measurement result is applicable to the identification information that is of the plurality of SIM cards supported by the terminal device and that is included in the measurement sharing policy confirmation information. For example, the terminal device supports three SIM cards: a card 1, a card 2, and a card 3, the measurement sharing policy confirmation information includes identification information of the card 1 and the card 2, and the card 2 is the first SIM card. In this case, the measurement result is applicable to the card 1 and the card 2, and is not applicable to the card 3.

In an implementation, the access network device sends the first measurement configuration information only to the first SIM card of the terminal device. After receiving the first measurement configuration information, the first SIM card configures the first configuration information for the plurality of SIM cards supported by the terminal device, and same measurement is performed on the plurality of SIM cards.

It should be understood that, in different communication scenarios, measurement performed by the terminal device is different. For example, during cell handover, the terminal device needs to perform measurement on signal power of a target cell, and when a component carrier is added, the terminal device needs to perform measurement on spectral power of the component carrier.

S211: The terminal device sends a first measurement report MeasurementReport to the access network device, where the first measurement report includes the measurement result.

In an implementation, the first measurement report may include identification information of the plurality of SIM cards that execute the measurement sharing policy.

After the terminal device sends the first measurement report to the access network device, the terminal device may perform different operations based on different communication scenarios. For example, when a component carrier is added, after measurement is performed on the component carrier SCC, data may be transmitted by using the SCC, where the plurality of SIM cards included in the measurement sharing policy may transmit data by using the SCC. For example, during cell handover, after the terminal device sends the first measurement report to the access network device, the terminal device needs to perform cell handover based on a command of the access network device.

In an implementation, the terminal device replicates the measurement result obtained through performing measurement on the first SIM card into a plurality of copies, and sends a plurality of measurement reports to the access network device by using the plurality of SIM cards.

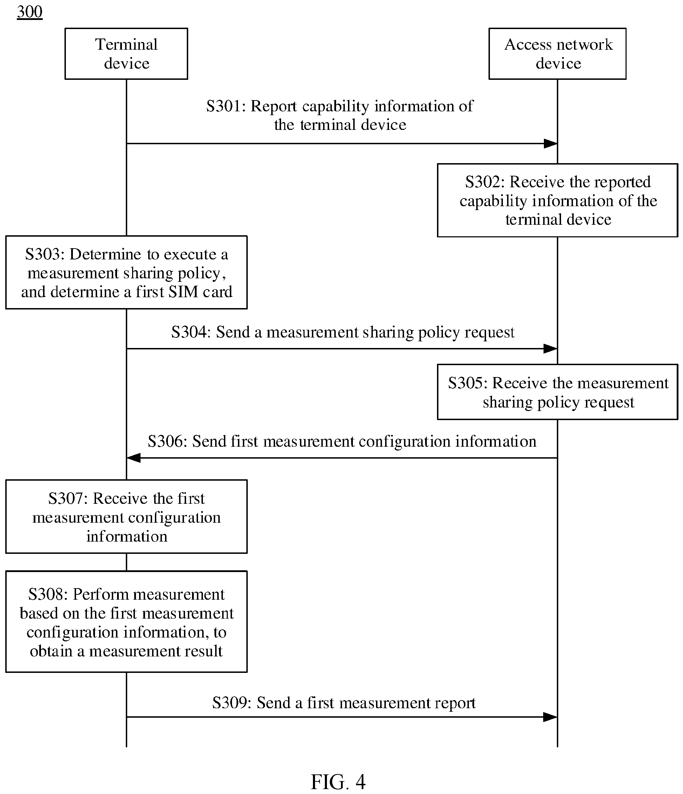

The following describes in detail, with reference to FIG. 4, a communication parameter measurement method for a multi-SIM terminal device provided in this application. FIG. 4 is a schematic flowchart of a communication parameter measurement method 300 for a multi-SIM terminal device according to an embodiment of this application. The method 300 may be applied to the scenario shown in FIG. 1. Certainly, the method may also be applied to another communication scenario. This is not limited in this embodiment of this application.

It should be further understood that in this embodiment of this application, the method is described by using an example in which the method is performed by a terminal device and an access network device. By way of example rather than limitation, the method may alternatively be performed by chips, chip systems, processors, or the like applied to the terminal device and the access network device.

As shown in FIG. 4, the method 300 shown in FIG. 4 may include S301 to S309. The following describes in detail each step in the method 300 with reference to FIG. 4.

S301: The terminal device reports capability information of the terminal device to the access network device.

For step S301, refer to step S201 in the method 200. To avoid repetition, details are not described herein again.

S302: The access network device receives the capability information of the terminal device reported by the terminal device.

S303. The terminal device determines to execute a measurement sharing policy, and determines a first SIM card.

In an implementation, the terminal device determines, based on a measurement sharing determining condition, that the terminal device executes the measurement sharing policy. The measurement sharing determining condition may be any one or more of the following conditions: The terminal device supports the measurement sharing policy, and the current data overheads of the terminal device are high and a data overhead requirement needs to be further reduced.

It should be understood that the terminal device may alternatively directly determine, without any judgment, that the terminal device executes the measurement sharing policy.

It should be further understood that a method for determining the first SIM card by the terminal device is similar to the method for determining the first SIM card by the access network device in the method 200, and only an execution body changes. Therefore, refer to the method for determining the first SIM card by the access network device in the method 200.

S304: The terminal device sends a measurement sharing policy request to the access network device by using the first SIM card.

The measurement sharing policy request may include identification information of the first SIM card. When the measurement sharing policy request includes only the identification information of the first SIM card, by default, a plurality of SIM cards supported by the terminal device jointly execute the measurement sharing policy. Alternatively, the measurement sharing policy request may include the identification information of the first SIM card and identification information of the plurality of SIM cards that are on the terminal device and that execute the measurement sharing policy. Alternatively, the measurement sharing policy request may include the identification information of the first SIM card, identification information of the plurality of SIM cards that are on the terminal device and that execute the measurement sharing policy, and indication information, where the indication information may be a bit, and of the bit is 1, it indicates that the measurement sharing policy is to be executed. Alternatively, the measurement sharing policy request may include the identification information of the first SIM card and indication information.

It should be understood that, when the measurement sharing policy request does not include the indication information, it indicates that the terminal device executes the measurement sharing policy by default.

An occasion on which the terminal device sends the measurement sharing policy request to the access network device by using the first SIM card may be classified into the following three cases:

In the first case, the terminal device may send the measurement sharing policy request to the access network device when RRC connection establishment of the first SIM card is completed. In this case, the measurement sharing policy request may be included in RRC connection establishment complete signaling sent by the terminal device to the access network device.

In the second case, the terminal device may send the measurement sharing policy request to the access network device when first measurement of the first SIM card is initiated. The time when the first measurement is initiated means the time when the first SIM card needs to perform measurement on a secondary component carrier, an inter-cell, or an inter-RAT system for the first time. A scenario in which the first measurement occurs includes but is not limited to cell reselection or cell handover.

In the third case, the terminal device may send the measurement sharing policy request to the access network device when the first SIM card sends a first measurement report to the access network device, where the first measurement report may include the measurement sharing policy request.

S305: The access network device receives the measurement sharing policy request sent by the terminal device.

In an implementation, when receiving the measurement sharing policy request sent by the terminal device, the access network device may not accept the execution of the measurement sharing policy and the first SIM card that are determined by the terminal device, but re-determines, based on a measurement sharing determining condition, whether to execute the measurement sharing policy on the terminal device. For other steps in this manner, refer to step S205 to step S211 in the method 200. Details are not described herein again.

In an implementation, when receiving the measurement sharing policy request sent by the terminal device, the access network device accepts the execution of the measurement sharing policy and the first SIM card that are determined by the terminal device. This manner is mainly described in the following steps in this embodiment of this application.

S306: The access network device sends first measurement configuration information MeasConfig to the terminal device.

S307: The terminal device receives the first measurement configuration information MeasConfig sent by the access network device.

S308: The terminal device performs measurement based on the first measurement configuration information, to obtain a measurement result.

S309: The terminal device sends a first measurement report MeasurementReport to the access network device, where the first measurement report includes the measurement result.

For step S306 to step S309, refer to step S208 to step S211 in the method 200. Details are not described herein again.

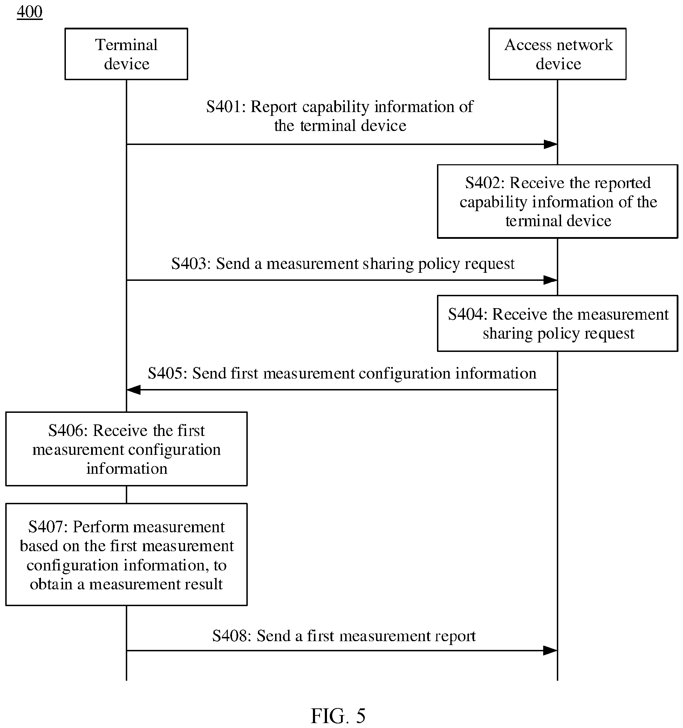

The following describes in detail, with reference to FIG. 5, a communication parameter measurement method for a multi-SIM terminal device provided in this application. FIG. 5 is a schematic flowchart of a communication parameter measurement method 400 for a multi-SIM terminal device according to an embodiment of this application. The method 400 may be applied to the scenario shown in FIG. 1. Certainly, the method may also be applied to another communication scenario. This is not limited in this embodiment of this application.

It should be further understood that in this embodiment of this application, the method is described by using an example in which the method is performed by a terminal device and an access network device. By way of example rather than limitation, the method may alternatively be performed by chips, chip systems, processors, or the like applied to the terminal device and the access network device.

As shown in FIG. 5, the method 400 shown in FIG. 5 may include S401 to S408. The following describes in detail each step in the method 500 with reference to FIG. 5.

S401: The terminal device reports capability information of the terminal device to the access network device.

S402: The access network device receives the capability information of the terminal device reported by the terminal device.

S403: The terminal device sends a measurement sharing policy request to the access network device.

S404: The access network device receives the measurement sharing policy request sent by the terminal device.

For step S401 to step S404, refer to step S201 to step S204 in the method 200. To avoid repetition, details are not described herein again.

When receiving the measurement sharing policy request sent by the terminal device, the access network device does not make a judgment immediately, but continues to perform a current data service. For example, the terminal device may send the measurement sharing policy request to the access network device when RRC connection establishment is completed, and the access network device does not make any judgment on the measurement sharing policy, but continues to perform a data service. Alternatively, the terminal device may send the measurement sharing policy request to the access network device when first measurement is initiated, the access network device does not make any judgment on the measurement sharing policy, and the terminal device performs the first measurement. Alternatively, the terminal device sends the measurement sharing policy request to the access network device when sending a first measurement report to the access network device, the access network device does not make any judgment on the measurement sharing policy, and the access network device performs a subsequent operation based on the measurement report.

In an implementation, when the access network device finds that a current network load of the access network device is heavy, a data volume is large, network overheads need to be reduced, and a data volume needs to be saved, the access network device determines to execute the measurement sharing policy. The access network device may determine a first SIM card based on performance of a plurality of SIM cards of the terminal device. For a method for determining the first SIM card by the access network device, refer to the method for determining the first SIM card by the access network device in the method 200. Details are not described herein again.

In an implementation, when the terminal device finds that a current network load of the access network device is heavy, a data volume is large, network overheads need to be reduced, and a data volume needs to be saved, the terminal device triggers execution of the measurement sharing policy. The terminal device may trigger execution of the measurement sharing policy by including the measurement sharing policy request in service information that the terminal device is currently sending to the access network device.

It should be understood that, when triggering execution of the measurement sharing policy, the terminal device may determine the first SIM card. Therefore, the measurement sharing policy request may include the first SIM card. A method for determining the first SIM card by the terminal device is similar to the method for determining the first SIM card by the access network device in the method 200, and only an execution body changes. Therefore, refer to the method for determining the first SIM card by the access network device in the method 200.

S405: The access network device sends first measurement configuration information MeasConfig to the terminal device.

S406: The terminal device receives the first measurement configuration information MeasConfig sent by the access network device.

S407: The terminal device performs measurement based on the first measurement configuration information, to obtain a measurement result.

S408: The terminal device sends a first measurement report MeasurementReport to the access network device, where the first measurement report includes the measurement result.

For step S405 to step S408, refer to step S208 to step S211 in the method 200. Details are not described herein again.

The foregoing describes in detail a communication parameter measurement method for a multi-SIM terminal device provided in this application. To understand this application more clearly, the following further describes this application by comparing a measurement process with that in a current technology.

In a communication scenario in which the terminal device performs cell reselection, cell handover, secondary cell group addition, component carrier addition, or the like, the terminal device needs to perform measurement on an inter-frequency or inter-RAT cell. A common measurement manner includes measurement that requires a GAP or measurement that requires no GAP.

For inter-frequency/inter-RAT measurement in an RRC idle state or an inactive state, the terminal device is in an idle state most of the time, and does not need to receive or transmit data in a serving cell. The idle time may be used for inter-frequency/inter-RAT measurement, and therefore, a measurement gap GAP does not need to be configured.

For inter-frequency/inter-RAT measurement in an RRC connected state, based on a capability of the terminal device, measurement that requires a GAP or measurement that requires no GAP may be used. If the terminal device has a plurality of sets of radio frequency channels, and can support receiving a signal in an inter-frequency/inter-RAT neighboring cell when receiving and transmitting a signal in the serving cell, the terminal device supports a measurement manner that requires no GAP. Otherwise, a measurement manner that requires a GAP is required. In the GAP, signal reception and transmission in the serving cell are stopped, and a radio frequency channel is adjusted to an inter-frequency/inter-RAT frequency to receive signals from an inter-frequency/inter-RAT neighboring cell. GAP measurement affects communication between the terminal device and a current serving cell.

A measurement gap is configured by an access network device. In the GAP, the access network device does not schedule, in the serving cell, downlink receiving and uplink transmission of a terminal. Therefore, no uplink or downlink block error is caused in the GAP. A measurement GAP configuration is shown in FIG. 5. FIG. 5 shows configuration parameters of a measurement GAP. The measurement GAP mainly includes three parameters: an MGRP (Measurement Gap Repetition Period, measurement gap repetition period) is used to configure a measurement GAP period, an MGL (Measurement Gap Length, measurement gap length) is used to configure a measurement GAP length, and gapOffset is used to configure a start position of the measurement gap. Based on the three parameters, it can be determined that the measurement gap starts from an SFN (System Frame Number, system frame number) and a subframe (subframe) that meet the following conditions:

$$\text{SFN mod T} = \text{FLOOR (gapOffset/10)};$$

$$\text{subframe} = \text{gapOffset mod 10};$$

and

$$\text{T} = \text{MGRP/10}.$$

The foregoing SFN and subframe are an SFN and a subframe of a PCell (Primary Cell, primary cell). A maximum MGL is 6 ms.

Measurement for a neighboring NR cell may be based on synchronization signal blocks (Synchronization Signal Block, SSB). However, due to a special design of an SSB signal, when the measurement manner that requires a gap (inter-frequency/inter-RAT measurement in an RRC_CONNECTED state) is used, a base station needs to configure an accurate gap location to include the SSBs of the neighboring cell. The SSBs of an NR cell are sent periodically, and a period may be 5 ms, 10 ms, 20 ms, 40 ms, 80 ms, or 160 ms. A plurality of SSBs may be sent in one period, but all the SSBs are sent in one 5 ms, to form an SSB burst. For example, when an SSB period is 20 ms, there are four 5 ms in the period. All SSBs are sent in one 5 ms, and no SSB is sent in the other three 5 ms. Therefore, when an access network device configures the measurement GAP, the GAP needs to include an SSB sending moment. Otherwise, a terminal device cannot receive, in the GAP, the SSBs of the neighboring NR cell, and consequently cannot detect the cell. A time-domain location of the measurement GAP refers to timing of the primary cell, and a time-domain location of the SSBs of the neighboring cell is sent based on timing of the neighboring cell. To configure a correct GAP location, a network device needs to know a timing difference between the primary cell and the neighboring NR cell, so that it is determined that an SFN and a subframe number that are of the SSBs of the neighboring NR cell correspond to the SFN and a subframe number that are of the primary cell. In this case, the terminal device may obtain the timing difference between the two cells by measuring a system frame number and frame timing difference (SFN and frame timing difference, SFTD), and report the timing difference to the access network device. The access network device configures a measurement GAP for the terminal device based on the timing difference between the two cells, so that the measurement GAP includes an SSB signal of the neighboring cell.

During the SFTD measurement, the terminal needs to receive a signal of another measured cell other than the PCell, to obtain timing information of the cell. In a DC scenario, a terminal can work in a PCell and a PS Cell simultaneously, and knows timing information of the PCell and the PSCell at any moment. Therefore, SFTD measurement is not difficult. For SFTD measurement between an LTE PCell and a neighboring NR cell in a non-DC scenario, if an RF channel of the terminal does not support the terminal in receiving a signal on the neighboring NR cell when receiving and transmitting a signal on the PCell, the SFTD measurement is difficult. The current protocol supports the following two manners: SFTD measurement that requires a gap and SFTD measurement in connected mode discontinuous reception (CONNECTED Discontinuous Reception, CDRX) in inactive time.

Measurement manners for a plurality of SIM cards supported by the terminal device are all configured by the access network device. Generally, there may be three cases: performing gap-assisted GAP measurement on all of the plurality of subscriber identity module SIM cards; performing non-gap-assisted noGAP measurement on all of the plurality of subscriber identity module SIM cards; and performing GAP measurement on the first part of SIM cards in the plurality of SIM cards, and performing noGAP measurement on the second part of SIM cards in the plurality of SIM cards. The following separately describes the three cases.

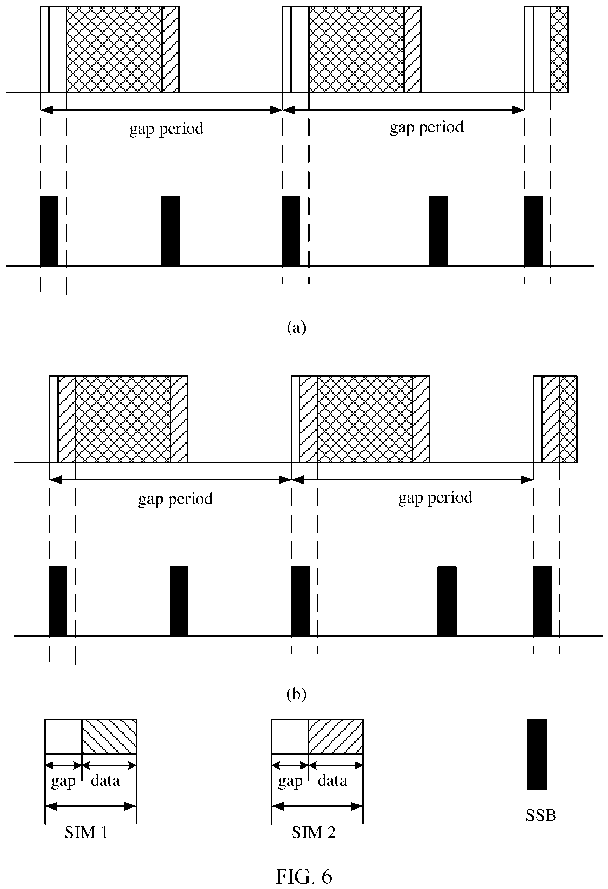

When gap-assisted GAP measurement is performed on all of the plurality of subscriber identity modules SIM cards supported by the terminal device, the terminal device performs GAP measurement on the first SIM card based on the measurement configuration information, and another SIM card may perform normal communication. FIG. 6 shows a measurement process in which two SIM cards reuse a measurement result. Figure (a) in FIG. 6 shows a case in a current technology. GAP measurement is performed on both SIM cards, and during the GAP measurement, neither of the two SIM cards can perform normal data communication. In figure (b) in FIG. 6, a measurement sharing policy is used. GAP measurement is performed on a SIM 1 card, but not on a SIM 2 card. The SIM 2 card performs data transmission. The SIM 2 card only needs to reuse a measurement result of the SIM 1 card. Therefore, measurement overheads are reduced, impact on data communication is avoided, and a system measurement procedure is optimized. It should be understood that the SIM 1 and the SIM 2 shown in FIG. 6 have consistent time in time domain. In FIG. 6, for ease of observation, the SIM 1 and the SIM 2 are separated by a segment in time domain, but actually the SIM 1 and the SIM 2 are overlapped in time domain.

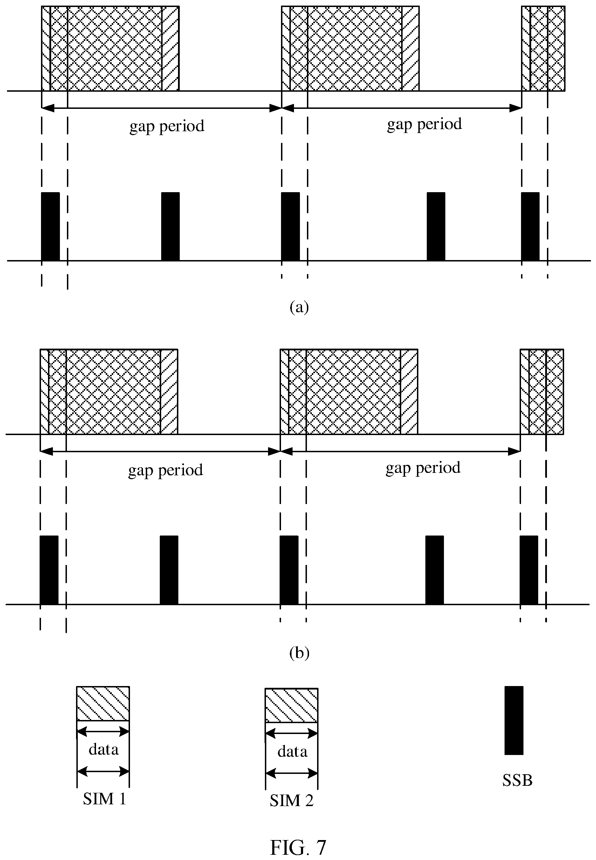

When gap-assisted noGAP measurement is performed on all of the plurality of subscriber identity modules SIM cards, the terminal device performs noGAP measurement on the first SIM card based on the measurement configuration message, and noGAP measurement does not need to be performed on another SIM card. FIG. 7 shows a measurement process in which two SIM cards reuse a measurement result. Figure (a) in FIG. 7 shows a case in a current technology, in which noGAP measurement is performed on both SIM cards, and during the noGAP measurement, both SIM cards can perform normal data communication. In figure (b) in FIG. 7, a measurement sharing policy is used, and noGAP measurement is performed on a SIM 1 card, but not on a SIM 2 card. The SIM 2 card only needs to reuse a measurement result of the SIM 1 card. Therefore, measurement overheads are reduced, and a system measurement procedure is optimized. It should be understood that the SIM 1 and the SIM 2 shown in FIG. 6 have consistent time in time domain. In FIG. 6, for ease of observation, the SIM 1 and the SIM 2 are separated by a segment in time domain, but actually the SIM 1 and the SIM 2 are overlapped in time domain. When gap-assisted noGAP measurement is performed on the plurality of subscriber identity module SIM cards, the plurality of subscriber identity module SIM cards may be in an RRC idle state or an inactive state, or the terminal device in which the plurality of subscriber identity module SIM cards are located may have a plurality of sets of radio frequency channels, and the radio frequency channels can support the terminal device in simultaneously receiving a signal in an inter-frequency/inter-RAT neighboring cell when receiving and transmitting a signal in a serving cell. This is not limited in this application. When noGAP measurement is performed on only one SIM card in the terminal device, and does not need to be performed on another SIM card, pressure of the terminal device can be reduced, and the terminal device does not need to have a plurality of sets of radio frequency channels. For example, the terminal device has four sets of radio frequency channels, and three SIM cards are currently installed in the terminal device. If noGAP measurement is performed on all of the three SIM cards, three additional sets of radio frequency channels are required. It is clear that the terminal device cannot provide three sets of radio frequency channels. In this case, the terminal device has to perform GAP measurement again, and therefore data communication is affected. However, in this application, only one of the SIM cards needs to be measured, the terminal device only needs to provide one set of radio frequency channels, and other SIM cards may reuse a measurement result of the SIM card. Therefore, pressure of the terminal device is reduced, impact on data communication is avoided, measurement overheads are reduced, and a system measurement procedure is optimized.

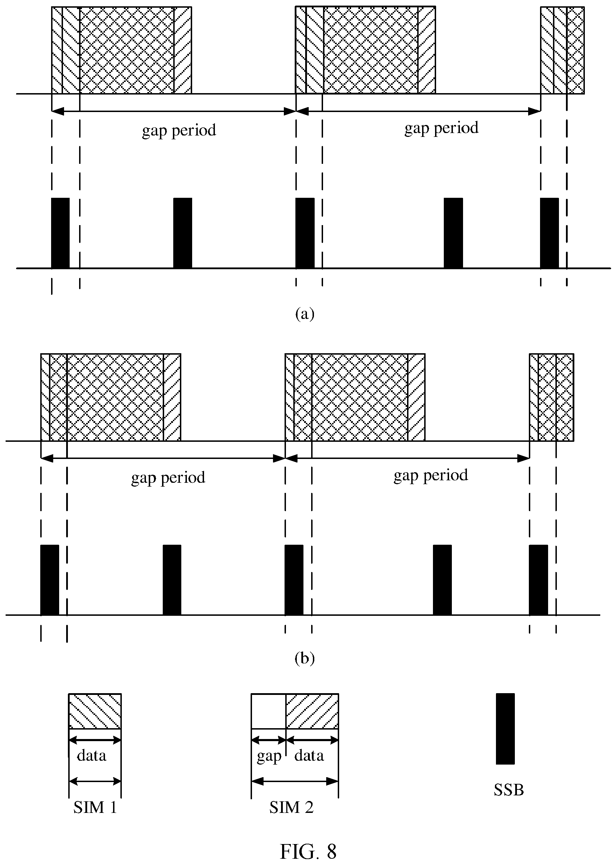

When GAP measurement is performed on the first part of SIM cards in the plurality of SIM cards, and noGAP measurement is performed on the second part of SIM cards in the plurality of SIM cards, a first SIM card is determined from the second part of SIM cards based on a measurement control parameter. The terminal device performs noGAP measurement on the first SIM card based on the measurement configuration message. The first SIM card is determined from the second part of SIM cards on which noGAP measurement is performed. The performing of noGAP measurement may not affect data transmission, and impact on a communication service is reduced. Figure (a) in FIG. 8 shows a case in a current technology. There are two SIM cards. GAP measurement is performed a SIM 2, and noGAP measurement is performed on a SIM 1. During the GAP measurement, the SIM 2 cannot perform normal data communication. In figure (b) in FIG. 8, a measurement sharing policy is used, and noGAP measurement is performed on the SIM 1 card, but not on the SIM 2 card. The SIM 2 card performs data transmission. The SIM 2 card only needs to reuse a measurement result of the SIM 1 card. The SIM 1 and the SIM 2 shown in FIG. 8 have consistent time in time domain. In FIG. 8, for ease of observation, the SIM 1 and the SIM 2 are separated by a segment in time domain, but actually the SIM 1 and the SIM 2 are overlapped in time domain.

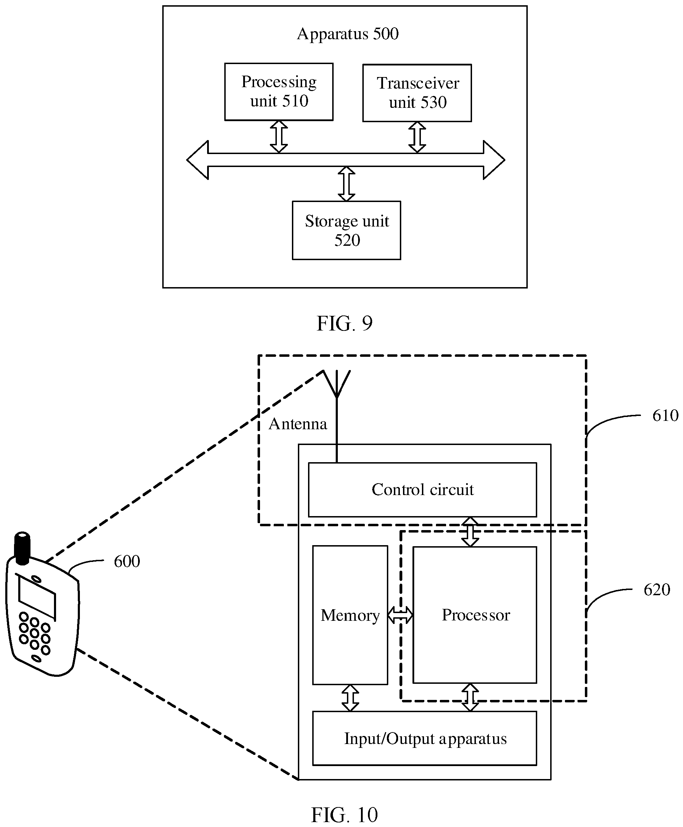

The foregoing describes in detail, with reference to FIG. 1 to FIG. 8, the communication parameter measurement method for a multi-SIM terminal device provided in embodiments of this application. The following describes in detail, with reference to FIG. 9 to FIG. 11, a communication apparatus provided in embodiments of this application.

FIG. 9 is a schematic block diagram of a communication apparatus 500 according to an embodiment of this application.

In some embodiments, the apparatus 500 may be a terminal device, or may be a chip or a circuit, for example, a chip or a circuit that may be disposed in a terminal device.

In some embodiments, the apparatus 500 may be an access network device, or may be a chip or a circuit, for example, a chip or a circuit that may be disposed in an access network device.

In a possible manner, the apparatus 500 may include a processing unit 510 (that is, an example of a processor) and a transceiver unit 530. In some possible implementations, the processing unit 510 may further be referred to as a determining unit. In some possible implementations, the transceiver unit 530 may include a receiving unit and a transmitting unit.

In an implementation, the transceiver unit 530 may be implemented by using a transceiver, a transceiver-related circuit, or an interface circuit.

In an implementation, the apparatus may further include a storage unit 520. In a possible manner, the storage unit 520 is configured to store instructions. In an implementation, the storage unit may alternatively be configured to store data or information. The storage unit 520 may be implemented by using a memory.

In some possible designs, the processing unit 510 is configured to execute the instructions stored in the storage unit 520, so that the apparatus 500 is enabled to implement the steps performed by the terminal device in the foregoing method. Alternatively, the processing unit 510 may be configured to invoke data in the storage unit 520, so that the apparatus 500 is enabled to implement the steps performed by the terminal device in the foregoing method.

In some possible designs, the processing unit 510 is configured to execute the instructions stored in the storage unit 520, so that the apparatus 500 is enabled to implement the steps performed by the access network device in the foregoing method. Alternatively, the processing unit 510 may be configured to invoke data in the storage unit 520, so that the apparatus 500 is enabled to implement the steps performed by the access network device in the foregoing method.

For example, the processing unit 510, the storage unit 520, and the transceiver unit 530 may communicate with each other by using an internal connection path, to transmit a control signal and/or a data signal For example, the storage unit 520 is configured to store a computer program, and the processing unit 510 may be configured to invoke the computer program from the storage unit 520 and run the computer program, to control the transceiver unit 530 to receive a signal and/or transmit a signal, so that the steps performed by the terminal device or the access network device in the foregoing method are completed. The storage unit 520 may be integrated into the processing unit 510, or may be disposed separately from the processing unit 510.

Optionally, when the apparatus 500 is a communication device (for example, a terminal device or an access network device), the transceiver unit 530 includes a receiver and a transmitter. The receiver and the transmitter may be a same physical entity or different physical entities. When the receiver and the transmitter are a same physical entity, the receiver and the transmitter may be collectively referred to as a transceiver.

Optionally, when the apparatus 500 is a chip or a circuit, the transceiver unit 530 includes an input interface and an output interface.

In an implementation, it may be considered that a function of the transceiver unit 530 is implemented by using a transceiver circuit or a dedicated transceiver chip.

It may be considered that the processing unit 510 is implemented by using a dedicated processing chip, a processing circuit, a processing unit, or a general-purpose chip.

In another implementation, it may be considered that a communication device (for example, the terminal device or the access network device) provided in this embodiment of this application is implemented by using a general-purpose computer. To be specific, program code for implementing functions of the processing unit 510 and the transceiver unit 530 is stored in the storage unit 520, and a general-purpose processing unit implements the functions of the processing unit 510 and the transceiver unit 530 by executing the code stored in the storage unit 520.

In some embodiments, the apparatus 500 may be the terminal device, or a chip or a circuit that is disposed in the terminal device. When the apparatus 500 is the terminal device, or a chip or circuit that is disposed in the terminal device, the transceiver unit 530 receives first measurement configuration information sent by the access network device; the processing unit 510 performs communication parameter measurement on a first SIM card based on the first measurement configuration information, to obtain a measurement result, where the measurement result is applicable to a plurality of SIM cards included in the terminal device, and the plurality of SIM cards share a same air interface network; and the transceiver unit 530 sends a first measurement report to the access network device, where the first measurement report includes the measurement result.

In an implementation, before the terminal device receives the first measurement configuration information, the transceiver unit 530 sends a measurement sharing policy request to the access network device, where the measurement sharing policy request includes identification information of the plurality of SIM cards; and the transceiver unit 530 receives measurement sharing policy confirmation information sent by the access network device, where the measurement sharing policy confirmation information includes identification information of the first SIM card.

In an implementation, before the terminal device receives the first measurement configuration information, the transceiver unit 530 sends a measurement sharing policy request to the access network device, where the measurement sharing policy request includes identification information of the plurality of SIM cards and identification information of a SIM card preselected for parameter measurement; and the transceiver unit 530 receives measurement sharing policy confirmation information sent by the access network device, where the measurement sharing policy confirmation information includes identification information of the first SIM card, and the first SIM card is the SIM card preselected for parameter measurement, or the first SIM card is a SIM card in the plurality of SIM cards other than the SIM card preselected for parameter measurement.

In an implementation, before the terminal device receives the first measurement configuration information, the transceiver unit 530 sends a measurement sharing policy request to the access network device, where the measurement sharing policy request includes identification information of the plurality of SIM cards and identification information of a SIM card preselected for parameter measurement; and the transceiver unit 530 receives measurement sharing policy confirmation information sent by the access network device, where the measurement sharing policy confirmation information indicates that the access network device agrees with the measurement sharing policy request sent by the terminal device, and the SIM card preselected for parameter measurement is the first SIM card.

In an implementation, before the terminal device receives the first measurement configuration information, the transceiver unit 530 sends a measurement sharing policy request to the access network device, where the measurement sharing policy request includes identification information of the plurality of SIM cards that are included in the terminal device and identification information of a SIM card preselected for parameter measurement; and the transceiver unit 530 receives the first measurement configuration information sent by the access network device, where the first measurement configuration information includes the identification information of the plurality of SIM cards and identification information of the first SIM card.

In an implementation, before the terminal device receives the first measurement configuration information, the transceiver unit 530 sends a measurement sharing policy request to the access network device, where the measurement sharing policy request includes identification information of the plurality of SIM cards, or the measurement sharing policy request includes identification information of the plurality of SIM cards that are included in the terminal device and identification information of a SIM card preselected for parameter measurement; the transceiver unit 530 receives a second measurement configuration message sent by the access network device, where the second measurement configuration message includes identification information of a target SIM card; the processing unit 510 performs measurement on the target SIM card based on the second measurement configuration message, to obtain a measurement result of the target SIM card; and the transceiver unit 530 sends a measurement report to the access network device, where the measurement report includes the measurement result of the target SIM card and identification information of the plurality of SIM cards.

In an implementation, before the terminal device receives the first measurement configuration information, the transceiver unit 530 sends a measurement sharing policy request to the access network device, where the measurement sharing policy request includes identification information of the plurality of SIM cards and identification information of a SIM card preselected for parameter measurement, and the SIM card preselected for parameter measurement is the first SIM card.

In an implementation, the first measurement configuration information includes identification information of the plurality of SIM cards, and the plurality of SIM cards share the first measurement configuration information.

In an implementation, the first measurement report includes the identification information of the plurality of SIM cards, and the plurality of SIM cards share the measurement result.

In an implementation, the method further includes: The processing unit 510 determines, based on performance of a SIM card, a SIM card preselected for parameter measurement.

In an implementation, the performance of a SIM card includes one or more of the following parameters: a quantity of supported dual-connectivity DC combinations, a quantity of supported carrier aggregation CA combinations, a quantity of supported multiple-input multiple-output MIMOs, whether non-gap measurement is supported, and a communication data volume.

In an implementation, that the processing unit 510 determines, based on performance of a SIM card, a SIM card preselected for parameter measurement includes: the terminal device determines, as the SIM card preselected for parameter measurement, a SIM card that meets any one or more of conditions that the quantity of DC combinations is greater than a first threshold, the quantity of supported CA combinations is greater than a second threshold, the quantity of supported MIMOs is greater than a third threshold, non-gap measurement is supported, and the communication data volume is less than a fourth threshold.

In an implementation, the terminal device includes N SIM cards, the measurement sharing policy includes identification information of M SIM cards, and M is less than or equal to N.

When the apparatus 500 is configured on the access network device or is the access network device, modules or units in the apparatus 500 may be configured to perform actions or processing processes performed by the access network device in the foregoing method. To avoid repetition, detailed descriptions thereof are omitted herein.

In some embodiments, the apparatus 500 may be the access network device, or a chip or circuit that is disposed in the access network device. When the apparatus 500 is the access network device, or a chip or circuit that is disposed in the access network device, the transceiver unit 530 sends first measurement configuration information to the terminal device; and the transceiver unit 530 receives a first measurement report sent by the terminal device, where the first measurement report is applicable to a plurality of SIM cards supported by the terminal device.

In an implementation, before the sending the first measurement configuration information to the terminal device, the transceiver unit 530 receives a measurement sharing policy request sent by the terminal device, where the measurement sharing policy request includes identification information of the plurality of SIM cards; and the transceiver unit 530 sends measurement sharing policy confirmation information to the terminal device, where the measurement sharing policy confirmation information includes identification information of the first SIM card.

In an implementation, before sending the first measurement configuration information to the terminal device, the transceiver unit 530 receives a measurement sharing policy request sent by the terminal device, where the measurement sharing policy request includes identification information of the plurality of SIM cards and identification information of a SIM card preselected for parameter measurement; and the transceiver unit 530 sends measurement sharing policy confirmation information to the terminal device, where the measurement sharing policy confirmation information includes identification information of the first SIM card, and the first SIM card is the SIM card preselected for parameter measurement, or the first SIM card is a SIM card in the plurality of SIM cards other than the SIM card preselected for parameter measurement.

In an implementation, before sending the first measurement configuration information to the terminal device, the method further includes: The transceiver unit 530 receives a measurement sharing policy request sent by the terminal device, where the measurement sharing policy request includes identification information of the plurality of SIM cards and identification information of a SIM card preselected for parameter measurement; and the transceiver unit 530 sends measurement sharing policy confirmation information to the terminal device, where the measurement sharing policy confirmation information indicates that the access network device agrees with the measurement sharing policy request sent by the terminal device, and the SIM card preselected for parameter measurement is the first SIM card.

In an implementation, before sending the first measurement configuration information to the terminal device, the transceiver unit 530 receives a measurement sharing policy request sent by the terminal device, where the measurement sharing policy request includes identification information of the plurality of SIM cards that are included in the terminal device and identification information of a SIM card preselected for parameter measurement; and the transceiver unit 530 sends the first measurement configuration information to the terminal device, where the first measurement configuration information includes the identification information of the plurality of SIM cards and identification information of the first SIM card.

In an implementation, before sending the first measurement configuration information to the terminal device, the transceiver unit 530 receives a measurement sharing policy request sent by the terminal device, where the measurement sharing policy request includes identification information of the plurality of SIM cards, or the measurement sharing policy request includes identification information of the plurality of SIM cards that are included in the terminal device and identification information of a SIM card preselected for parameter measurement; the transceiver unit 530 sends a second measurement configuration message to the terminal device, where the second measurement configuration message includes identification information of a target SIM card; and the transceiver unit 530 receives a measurement report sent by the terminal device, where the measurement report includes a measurement result of the target SIM card and identification information of the plurality of SIM cards.

In an implementation, before sending the first measurement configuration information to the terminal device, the transceiver unit 530 receives a measurement sharing policy request sent by the terminal device, where the measurement sharing policy request includes identification information of the plurality of SIM cards and identification information of a SIM card preselected for parameter measurement, and the SIM card preselected for parameter measurement is the first SIM card.

In an implementation, the first measurement configuration message includes identification information of the plurality of SIM cards, and the plurality of SIM cards share the first measurement configuration information.

In an implementation, the first measurement report includes the identification information of the plurality of SIM cards, and the plurality of SIM cards share the measurement result.

In an implementation, the processing unit 510 determines, based on performance of a SIM card, the first SIM card.

In an implementation, the performance of a SIM card includes one or more of the following parameters: a quantity of supported dual-connectivity DC combinations, a quantity of supported carrier aggregation CA combinations, a quantity of supported multiple-input multiple-output MIMOs, whether non-gap measurement is supported, and a communication data volume.

In an implementation, that the processing unit 510 determines, based on performance of a SIM card, the first SIM card includes: determining, as the first SIM card, a SIM card that meets any one or more of conditions that the quantity of DC combinations is greater than a first threshold, the quantity of supported CA combinations is greater than a second threshold, the quantity of supported MIMOs is greater than a third threshold, non-gap measurement is supported, and the communication data volume is less than a fourth threshold.

When the apparatus 500 is configured on the access network device or is the access network device, modules or units in the apparatus 500 may be configured to perform actions or processing processes performed by the access network device in the foregoing method. To avoid repetition, detailed descriptions thereof are omitted herein.

For concepts, explanations, detailed descriptions, and other steps of the apparatus 500 that are related to the technical solutions provided in this embodiment of this application, refer to descriptions about the content in the foregoing method or other embodiments. Details are not described herein again.

FIG. 10 is a schematic diagram of a structure of a terminal device 600 according to this application. The terminal device 600 may perform the actions performed by the terminal device in the foregoing method embodiments.

For ease of description, FIG. 10 shows only main components of the terminal device. As shown in FIG. 10, the terminal device 600 includes a processor, a memory, a control circuit, an antenna, and an input/output apparatus.

The processor is mainly configured to: process a communication protocol and communication data, control the entire terminal device, execute a software program, and process data of the software program. For example, the processor is configured to support the terminal device in performing an action described in the foregoing embodiment of the transmission precoding matrix indication method. The memory is mainly configured to store a software program and data, for example, store the codebook described in the foregoing embodiment. The control circuit is mainly configured to perform conversion between a baseband signal and a radio frequency signal, and process the radio frequency signal. The control circuit and the antenna together may alternatively be referred to as a transceiver, and are mainly configured to receive and transmit a radio frequency signal in an electromagnetic wave form. The input/output apparatus such as a touchscreen, a display, or a keyboard is mainly configured to receive data input by a user and output data to the user.

After the terminal device is powered on, the processor may read a software program in a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends out a radio frequency signal in an electromagnetic wave form by using the antenna. When data is sent to the terminal device, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 10 shows only one memory and one processor. In an actual terminal device, there may be a plurality of processors and memories. The memory may alternatively be referred to as a storage medium, a storage device, or the like. This is not limited in this embodiment of this application.

For example, the processor may include a baseband processor and a central processing unit. The baseband processor is mainly configured to process a communication protocol and communication data. The central processing unit is mainly configured to control the entire terminal device, execute a software program, and process data of the software program. The processor in FIG. 10 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected by using various buses. The baseband processor may alternatively be represented as a baseband processing circuit or a baseband processing chip. The central processing unit may alternatively be represented as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna that has receiving and transmitting functions and the control circuit may be considered as a transceiver unit 610 of the terminal device 600, and the processor that has a processing function may be considered as a processing unit 620 of the terminal device 600. As shown in FIG. 10, the terminal device 600 includes the transceiver unit 610 and the processing unit 620. A transceiver unit may alternatively be referred to as a transceiver, a transceiver machine, a transceiver apparatus, or the like. Optionally, a component that is in the transceiver unit 610 and that is configured to implement a receiving function may be considered as a receiving unit, and a component that is in the transceiver unit 610 and that is configured to implement a transmitting function may be considered as a transmitting unit. In other words, the transceiver unit includes a receiving unit and a transmitting unit. For example, the receiving unit may alternatively be referred to as a receiver machine, a receiver, a receiver circuit, or the like; and the transmitting unit may be referred to as a transmitter machine, a transmitter, a transmitter circuit, or the like.

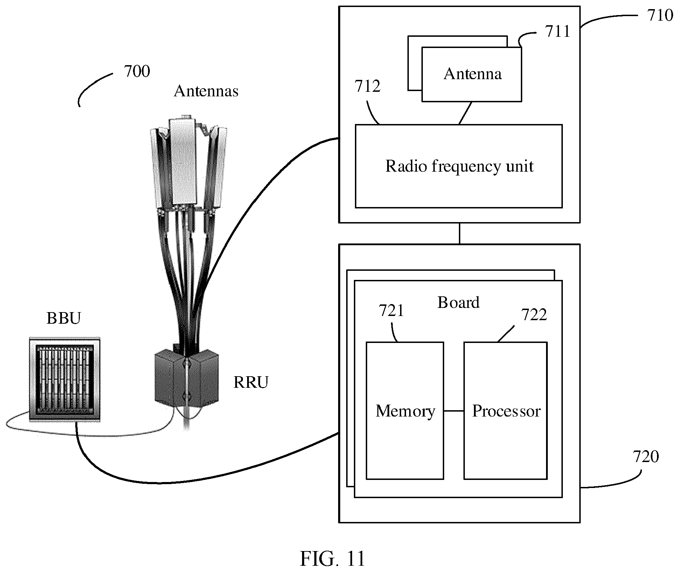

FIG. 11 is a schematic diagram of a structure of an access network device 700 according to an embodiment of this application. The access network device 700 may be configured to implement functions of the access device (for example, a first access network device, a second access network device, or a third access network device) in the foregoing method. The access network device 700 includes one or more radio frequency units, such as a remote radio unit (remote radio unit, RRU) 710 and one or more baseband units (baseband unit, BBU) (which may alternatively be referred to as a digital unit, digital unit, DU) 720. The RRU 710 may be referred to as a transceiver unit, a transceiver machine, a transceiver circuit, a transceiver, or the like, and may include at least one antenna 711 and a radio frequency unit 712. The RRU 710 part is mainly configured to receive and transmit a radio frequency signal and perform conversion between the radio frequency signal and a baseband signal, for example, configured to send the signaling message in the foregoing embodiment to a terminal device. The BBU 720 part is mainly configured to perform baseband processing, control a base station, and the like. The RRU 710 and the BBU 720 may be physically disposed together, or may be physically disposed separately, that is, a distributed base station.

The BBU 720 is a control center of the base station, may alternatively be referred to as a processing unit, and is mainly configured to complete a baseband processing function such as channel coding, multiplexing, modulation, or spectrum spreading. For example, the BBU (the processing unit) 720 may be configured to control a base station 40 to perform the operation procedure related to the network device in the foregoing method embodiment.

In an example, the BBU 720 may include one or more boards, and the plurality of boards may jointly support a radio access network (for example, an LTE system or a 5G system) of a single access standard, or may respectively support radio access networks of different access standards. The BBU 720 further includes a memory 721 and a processor 722. The memory 721 is configured to store necessary instructions and data. For example, the memory 721 stores the codebook and the like in the foregoing embodiment. The processor 722 is configured to control the base station to perform a necessary action, for example, configured to control the base station to perform the operation procedure related to the network device in the foregoing method embodiment. The memory 721 and the processor 722 may serve one or more boards. In other words, a memory and a processor may be individually disposed on each board. Alternatively, the plurality of boards may share a same memory and a same processor. In addition, a necessary circuit may further be disposed on each board.

In a possible implementation, with development of a system-on-a-chip (system-on-chip, SoC) technology, all or some functions of the 720 part and the 710 part may be implemented by using the SoC technology, for example, implemented by using a base station function chip, where the base station function chip integrates components such as a processor, a memory, and an antenna interface. A program of a related function of the base station is stored in the memory, and the processor executes the program to implement the related function of the base station. Optionally, the base station function chip can also read a memory outside the chip to implement a related function of the base station.

It should be understood that a structure of the access network device shown in FIG. 11 is merely a possible form, and should not constitute any limitation on this embodiment of this application. This application does not exclude a possibility that a base station structure of another form may appear in the future.

It should be understood that, in this embodiment of this application, the processor may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor, or the like.

It should be further understood that the memory in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. It is illustrated by way of example rather than limitation, that many forms of random access memories (random access memory, RAM) are available, such as a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented all or partially in a form of a computer program product. The computer program product includes one or more computer instructions or computer programs. When the computer instructions or the computer programs are loaded or executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

An embodiment of this application further provides a computer-readable medium. The computer-readable medium stores a computer program. When the computer program is executed by a computer, the steps performed by the terminal device or the steps performed by the access network device in any one of the foregoing embodiments are implemented.

An embodiment of this application further provides a computer program product. When the computer program product is executed by a computer, the steps performed by the terminal device or the steps performed by the access network device in any one of the foregoing embodiments are implemented.

An embodiment of this application further provides a system chip. The system chip includes a communication unit and a processing unit. The processing unit may be, for example, a processor. The communication unit may be, for example, a communication interface, an input/output interface, a pin, or a circuit. The processing unit may execute computer instructions, so that the chip in the communication apparatus performs the steps performed by the terminal device or the steps performed by the access network device provided in the foregoing embodiments of this application.

Optionally, the computer instructions are stored in a storage unit.

According to the method provided in embodiments of this application, an embodiment of this application further provides a communication system, including the foregoing access network device and terminal device.

The embodiments in this application may be used independently, or may be used jointly. This is not limited herein.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

It should be understood that the term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. "At least one of A and B", similar to "A and/or B", describes an association relationship between associated objects and represents that three relationships may exist. For example, at least one of A and B may represent the following three cases: Only A exists, both A and B exist, and only B exists.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on a particular application and a design constraint condition that are of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus and method may be implemented in another manner. The described apparatus embodiment is merely an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one location, or may be distributed on a plurality of network units. Some or all of the units may be selected based on an actual requirement to achieve the objectives of the solutions of the embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part that contributes to the current technology, or the part of the technical solutions may be embodied in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication parameter measurement method for a multi-SIM terminal device, applied to a terminal device and comprising:

   receiving first measurement configuration information sent by an access network device;
   performing communication parameter measurement on a first SIM card based on the first measurement configuration information, to obtain a measurement result, wherein the measurement result is applicable to a plurality of SIM cards comprised in the terminal device, and the plurality of SIM cards share a same air interface network; and
   sending a first measurement report to the access network device, wherein the first measurement report comprises the measurement result.

2. The method according to claim 1, wherein before the terminal device receives the first measurement configuration information, the method further comprises:

   sending a measurement sharing policy request to the access network device, wherein the measurement sharing policy request comprises identification information of the plurality of SIM cards; and
   receiving measurement sharing policy confirmation information sent by the access network device, wherein the measurement sharing policy confirmation information comprises identification information of the first SIM card.

3. The method according to claim 1, wherein before the terminal device receives the first measurement configuration information, the method further comprises:

   sending a measurement sharing policy request to the access network device, wherein the measurement sharing policy request comprises identification information of the plurality of SIM cards and identification information of a SIM card preselected for parameter measurement; and
   receiving measurement sharing policy confirmation information sent by the access network device, wherein the measurement sharing policy confirmation information comprises identification information of the first SIM card, and the first SIM card is the SIM card preselected for parameter measurement, or the first SIM card is a SIM card in the plurality of SIM cards other than the SIM card preselected for parameter measurement.

4. The method according to claim 1, wherein before the terminal device receives the first measurement configuration information, the method further comprises:

   sending a measurement sharing policy request to the access network device, wherein the measurement sharing policy request comprises identification information of the plurality of SIM cards and identification information of a SIM card preselected for parameter measurement; and
   receiving measurement sharing policy confirmation information sent by the access network device, wherein the measurement sharing policy confirmation information indicates that the access network device agrees with the measurement sharing policy request sent by the terminal device, and the SIM card preselected for parameter measurement is the first SIM card.

5. The method according to claim 1, wherein before the terminal device receives the first measurement configuration information, the method further comprises:

sending a measurement sharing policy request to the access network device, wherein the measurement sharing policy request comprises identification information of the plurality of SIM cards that are comprised in the terminal device and identification information of a SIM card preselected for parameter measurement; and receiving the first measurement configuration information sent by the access network device, wherein the first measurement configuration information comprises the identification information of the plurality of SIM cards and identification information of the first SIM card.

6. The method according to claim 1, wherein before the terminal device receives the first measurement configuration information, the method further comprises:

sending a measurement sharing policy request to the access network device, wherein the measurement sharing policy request comprises identification information of the plurality of SIM cards, or the measurement sharing policy request comprises identification information of the plurality of SIM cards that are comprised in the terminal device and identification information of a SIM card preselected for parameter measurement; receiving, by the terminal device, a second measurement configuration message sent by the access network device, wherein the second measurement configuration message comprises identification information of a target SIM card; performing, by the terminal device, measurement based on the second measurement configuration information by using the target SIM card, to obtain a measurement result of the target SIM card; and sending, by the terminal device by using the target SIM card, a measurement report to the access network device, wherein the measurement report comprises the measurement result of the target SIM card and the identification information of the plurality of SIM cards.

7. The method according to claim 1, wherein before the terminal device receives the first measurement configuration information, the method further comprises: sending a measurement sharing policy request to the access network device, wherein the measurement sharing policy request comprises identification information of the plurality of SIM cards and identification information of a SIM card preselected for parameter measurement; and the SIM card preselected for parameter measurement is the first SIM card.

8. The method according to any one of claims 1 to 7, wherein the first measurement configuration information comprises the identification information of the plurality of SIM cards, and the plurality of SIM cards share the first measurement configuration information.

9. The method according to any one of claims 1 to 8, wherein the first measurement report comprises the identification information of the plurality of SIM cards, and the plurality of SIM cards share the measurement result.

10. The method according to any one of claims 3 to 9, wherein the method further comprises:
determining, by the terminal device based on performance of a SIM card, the SIM card preselected for parameter measurement.

11. The method according to claim 10, wherein the performance of a SIM card comprises one or more of the following parameters:
a quantity of supported dual-connectivity DC combinations, a quantity of supported carrier aggregation CA combinations, a quantity of supported multiple-input multiple-output MIMOs, whether non-gap measurement is supported, and a communication data volume.

12. The method according to claim 11, wherein the determining, by the terminal device based on performance of a SIM card, the SIM card preselected for parameter measurement comprises:
determining, by the terminal device as the SIM card preselected for parameter measurement, a SIM card that meets any one or more of conditions that the quantity of DC combinations is greater than a first threshold, the quantity of supported CA combinations is greater than a second threshold, the quantity of supported MIMOs is greater than a third threshold, non-gap measurement is supported, and the communication data volume is less than a fourth threshold.

13. The method according to any one of claims 2 to 12, wherein the terminal device comprises N SIM cards, the measurement sharing policy comprises identification information of M SIM cards, and M is less than or equal to N.

14. A communication parameter measurement method for a multi-SIM terminal device, applied to a terminal device and comprising:

receiving a plurality of pieces of measurement configuration information sent by an access network device, wherein each of the plurality of pieces of measurement configuration information corresponds to one SIM card in a plurality of SIM cards that are supported by the terminal device, and each of the plurality of pieces of measurement configuration information comprises identification information of a SIM card measured by using the piece of measurement configuration information;

performing, by the terminal device, measurement on a first subscriber identity module SIM card based on first measurement configuration information, to obtain a measurement result, wherein the plurality of pieces of measurement configuration information comprise the first measurement configuration information, the measurement result is applicable to the plurality of SIM cards supported by the terminal device, and the plurality of SIM cards share a same air interface network;

replicating, by the terminal device, the measurement result into a plurality of copies; and

sending a plurality of measurement reports to the access network device.

15. A communication parameter measurement method for a multi-SIM terminal device, applied to an access network device and comprising:

sending first measurement configuration information to a terminal device; and

receiving a first measurement report sent by the terminal device, wherein the first measurement report is applicable to a plurality of SIM cards supported by the terminal device.

16. The method according to claim 15, wherein before the sending first measurement configuration information to a terminal device, the method further comprises:

receiving a measurement sharing policy request sent by the terminal device, wherein the measurement sharing policy request comprises identification information of the plurality of SIM cards; and

sending measurement sharing policy confirmation information to the terminal device, wherein the measurement sharing policy confirmation information comprises identification information of the first SIM card.

17. The method according to claim 15, wherein before the sending first measurement configuration information to a terminal device, the method further comprises:

receiving a measurement sharing policy request sent by the terminal device, wherein the measurement sharing policy request comprises identification information of the plurality of SIM cards and identification information of a SIM card preselected for parameter measurement; and

sending measurement sharing policy confirmation information to the terminal device, wherein the measurement sharing policy confirmation information comprises identification information of the first SIM card, and the first SIM card is the SIM card preselected for parameter measurement, or the first SIM card is a SIM card in the plurality of SIM cards other than the SIM card preselected for parameter measurement.

18. The method according to claim 15, wherein before the sending first measurement configuration information to a terminal device, the method further comprises:

receiving a measurement sharing policy request sent by the terminal device, wherein the measurement sharing policy request comprises identification information of the plurality of SIM cards and identification information of a SIM card preselected for parameter measurement; and

sending measurement sharing policy confirmation information to the terminal device, wherein the measurement sharing policy confirmation information indicates that the access network device agrees with the measurement sharing policy request sent by the terminal device, and the SIM card preselected for parameter measurement is the first SIM card.

19. The method according to claim 15, wherein before the sending first measurement configuration information to a terminal device, the method further comprises:

receiving a measurement sharing policy request sent by the terminal device, wherein the measurement sharing policy request comprises identification information of the plurality of SIM cards that are comprised in the terminal device and identification information of a SIM card preselected for parameter measurement; and

sending the first measurement configuration information to the terminal device, wherein the first measurement configuration information comprises the identification information of the plurality of SIM cards and identification information of the first SIM card.

20. The method according to claim 15, wherein before the sending first measurement configuration information to a terminal device, the method further comprises:

receiving a measurement sharing policy request sent by the terminal device, wherein
the measurement sharing policy request comprises identification information of the plurality of SIM cards, or the measurement sharing policy request comprises identification information of the plurality of SIM cards that are comprised in the terminal device and identification information of a SIM card preselected for parameter measurement;
sending a second measurement configuration message to the terminal device, wherein the second measurement configuration message comprises identification information of a target SIM card; and
receiving a measurement report sent by the terminal device, wherein the measurement report comprises a measurement result of the target SIM card and the identification information of the plurality of SIM cards.

21. The method according to claim 15, wherein before the sending first measurement configuration information to a terminal device, the method further comprises:
receiving a measurement sharing policy request sent by the terminal device, wherein the measurement sharing policy request comprises identification information of the plurality of SIM cards and identification information of a SIM card preselected for parameter measurement; and the SIM card preselected for parameter measurement is the first SIM card.

22. The method according to any one of claims 15 to 21, wherein the first measurement configuration message comprises the identification information of the plurality of SIM cards, and the plurality of SIM cards share the first measurement configuration information.

23. The method according to any one of claims 14 to 22, wherein the first measurement report comprises the identification information of the plurality of SIM cards, and the plurality of SIM cards share the measurement result.

24. The method according to any one of claims 14 to 23, wherein the method further comprises:
determining, by the access network device based on performance of a SIM card, the first SIM card.

25. The method according to claim 24, wherein the performance of a SIM card comprises one or more of the following parameters:
a quantity of supported dual-connectivity DC combinations, a quantity of supported carrier aggregation CA combinations, a quantity of supported multiple-input multiple-output MIMOs, whether non-gap measurement is supported, and a communication data volume.

26. The method according to claim 25, wherein the determining, by the access network device based on performance of a SIM card, the first SIM card comprises:
determining, as the first SIM card, a SIM card that meets any one or more of conditions that the quantity of DC combinations is greater than a first threshold, the quantity of supported CA combinations is greater than a second threshold, the quantity of supported MIMOs is greater than a third threshold, non-gap measurement is supported, and the communication data volume is less than a fourth threshold.

27. A communication parameter measurement method for a multi-SIM terminal device, applied to an access network device and comprising:

replicating measurement configuration information into a plurality of copies based on a measurement sharing policy;
sending a plurality of pieces of measurement configuration information to a terminal device by using a plurality of SIM cards supported by the terminal device, wherein each of the plurality of pieces of measurement configuration information corresponds to one SIM card in the plurality of SIM cards that are supported by the terminal device, and each of the plurality of pieces of measurement configuration information comprises identification information of a SIM card measured by using the piece of measurement configuration information; and
receiving a plurality of measurement reports that are sent, by using the plurality of SIM cards supported by the terminal device, by the terminal device.

28. A communication apparatus, wherein the apparatus comprises at least one processor, the at least one processor is coupled to at least one memory, and the at least one processor is configured to execute a computer program or instructions stored in the at least one memory, so that the apparatus is enabled to perform the method according to any one of claims 1 to 14 or the method according to any one of claims 15 to 27.

29. A computer-readable storage medium, wherein the computer-readable storage medium stores a computer program or instructions, and when a computer reads and executes the computer program or the instructions, the computer is enabled to perform the method according to any one of claims 1 to 14 or the method according to any one of claims 15 to 27.

30. A chip, comprising a processor, configured to invoke a computer program from a memory and run the computer program, so that a communication device in which the chip is installed performs the method according to any one of claims 1 to 14 or the method according to any one of claims 15 to 27.

100

Access network
device 110

Terminal
device 120

Uu

FIG. 1

Multi-SIM
terminal device

Access network
device

UE 1

Measurement
configuration message 1

Measurement
report message 1

UE 2

Measurement
configuration message 2

Measurement
report message 2

FIG. 2

200

```
┌─────────────────────────┐                          ┌─────────────────────────┐
│     Terminal device     │                          │   Access network device │
└─────────────────────────┘                          └─────────────────────────┘
```

S201: Report capability
information of the terminal device

S202: Receive the reported
capability information of the
terminal device

S203: Send a measurement sharing policy request

S204: Receive the measurement
sharing policy request

S205: Determine, based on a
measurement sharing
determining condition, that the
terminal device executes a
measurement sharing policy

S206: Send measurement sharing
policy confirmation information

S207: Receive the measurement
sharing policy confirmation
information

S208: Send first measurement
configuration information

S209: Receive the first
measurement configuration
information

S210: Perform measurement
based on the first measurement
configuration information, to
obtain a measurement result

S211: Send a first measurement report

FIG. 3

300

```
┌──────────┐                                    ┌──────────────┐
│ Terminal │                                    │Access network│
│  device  │                                    │    device    │
└──────────┘                                    └──────────────┘
```

S301: Report capability information of
the terminal device

S302: Receive the reported
capability information of the
terminal device

S303: Determine to execute a
measurement sharing policy,
and determine a first SIM card

S304: Send a measurement sharing policy request

S305: Receive the measurement
sharing policy request

S306: Send first measurement configuration information

S307: Receive the first
measurement configuration
information

S308: Perform measurement
based on the first measurement
configuration information, to
obtain a measurement result

S309: Send a first measurement report

FIG. 4

400

```
┌─────────────┐                                    ┌──────────────┐
│  Terminal   │                                    │Access network│
│   device    │                                    │    device    │
└─────────────┘                                    └──────────────┘
```

S401: Report capability information of
the terminal device

S402: Receive the reported
capability information of the
terminal device

S403: Send a measurement sharing policy request

S404: Receive the measurement
sharing policy request

S405: Send first measurement configuration information

S406: Receive the first
measurement configuration
information

S407: Perform measurement
based on the first measurement
configuration information, to
obtain a measurement result

S408: Send a first measurement report

FIG. 5

(a)

(b)

gap | data

SIM 1

gap | data

SIM 2

SSB

FIG. 6

(a)

(b)

data
SIM 1

data
SIM 2

SSB

FIG. 7

(a)

(b)

FIG. 8

FIG. 9

FIG. 10

FIG. 11

## INTERNATIONAL SEARCH REPORT

| International application No. |
| --- |
| **PCT/CN2020/138635** |

**A.    CLASSIFICATION OF SUBJECT MATTER**

H04W 8/18(2009.01)i

According to International Patent Classification (IPC) or to both national classification and IPC

**B.    FIELDS SEARCHED**

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; VEN: 共享, 复制, 共用, 多, 双, SIM卡, 用户身份模块, 用户识别模块, 测量, share, copy, multi+, dual, subscriber identification module, measure

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110710262 A (BEIJING XIAOMI MOBILE SOFTWARE CO., LTD.) 17 January 2020 (2020-01-17)<br>description, paragraphs [0095]-[0213], and figures 1-15 | 1-30 |
| Y | CN 104796963 A (MARVELL INTERNATIONAL, LTD.) 22 July 2015 (2015-07-22)<br>description, paragraphs [0024]-[0070], and figures 1-5 | 1-30 |
| Y | CN 103781093 A (HUAWEI TECHNOLOGY SERVICE CO., LTD.) 07 May 2014 (2014-05-07)<br>description paragraphs [0118]-[0136] | 1-30 |

☐ Further documents are listed in the continuation of Box C.          ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **04 March 2021** | **12 March 2021** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/138635**

| Patent document cited in search report | | | Publication date (day/month/year) | Patent family member(s) | | | Publication date (day/month/year) |
|---|---|---|---|---|---|---|---|
| CN | 110710262 | A | 17 January 2020 | WO | 2020248107 | A1 | 17 December 2020 |
| CN | 104796963 | A | 22 July 2015 | None | | | |
| CN | 103781093 | A | 07 May 2014 | CN | 103781093 | B | 10 May 2017 |

Form PCT/ISA/210 (patent family annex) (January 2015)

**REFERENCES CITED IN THE DESCRIPTION**

**Patent documents cited in the description**

- CN 202010093901